**Europäisches Patentamt**

**European Patent Office**

**Office européen des brevets**

(11) Veröffentlichungsnummer: **0 209 515**
**B1**

## EUROPÄISCHE PATENTSCHRIFT ·

(45) Veröffentlichungstag der Patentschrift: **25.04.90**

(51) Int. Cl.⁵: **G 01 H 9/00,** G 01 D 5/26

(21) Anmeldenummer: **86890197.6**

(22) Anmeldetag: **04.07.86**

(54) **Faseroptischer Sensor.**

(30) Priorität: **08.07.85 AT 2013/85**

(43) Veröffentlichungstag der Anmeldung:
**21.01.87 Patentblatt 87/04**

(45) Bekanntmachung des Hinweises auf die
Patenterteilung:
**25.04.90 Patentblatt 90/17**

(84) Benannte Vertragsstaaten:
**AT BE CH DE FR GB IT LI LU NL SE**

(56) Entgegenhaltungen:
**EP-A-0 005 798**
**EP-A-0 104 513**
**FR-A-2 310 579**
**US-A-3 580 082**
**US-A-4 446 543**

**PATENTS ABSTRACTS OF JAPAN, Band 5, Nr.**
**40 (E-49)712r, 17. März 1981; & JP-A-55 162 700**
**(MATSUSHITA DENKI SANGYO K.K.) 18-12-1980**
**LASER UND OPTOELEKTRONIK, Band 15, Nr. 3,**
**September 1983, Seiten 226-234, Stuttgart, DE;**
**K. SPENNER et al.: "Faseroptische Multimode-**
**Sensoren: eine Übersicht"**

(73) Patentinhaber: **Fleck, Carl Maria, Dr.**
**Doktorberg 23, E5**
**A-2391 Kaltenleutgeben (AT)**

(72) Erfinder: **Fleck, Carl Maria, Dr.**
**Doktorberg 23, E5**
**A-2391 Kaltenleutgeben (AT)**

(74) Vertreter: **Kliment, Peter, Dipl.-Ing. Mag.-jur.**
**Singerstrasse 8**
**A-1010 Wien (AT)**

(56) Entgegenhaltungen:
**REGELUNGSTECHNISCHE PRAXIS, Band 25, Nr.**
**12, Dezember 1983, Seiten 503-507, München,**
**DE; A. SCHWAIER: "Optische Aufnehmer und**
**Verfahren für die Prozessmesstechnik"**

**Beschreibung**

Die Erfindung bezieht sich auf ein Verfahren zur Herstellung eines amplituden- oder intensitätsmodulierten faseroptischen Reflexionssensors, insbesondere eines Schwingungs- oder Klopfsensors, mit mindestens einer das Licht zu einer reflektierenden Oberfläche oder Membrane leitenden optischen Faser, die das Licht nach erfolgter Reflexion wieder einfängt und einer weiteren Verarbeitung zuleitet, bei dem die optische Faser an ihrer Stirnseite geschliffen und in ihrem einen Endbereich in einem Block fixiert und die reflektierende Gegenfläche in einem bestimmten Abstand von der dieser zugekehrten Stirnseite der optischen Faser angebracht wird und auf einen entsprechenden sensor.

Die Anzahl faseroptischer Sensoren, über die auf Tagungen und Symposien berichtet wird, ist in den letzten Jahren stark gewachsen. So gibt es etwa in dem Bereich der mechanischen Sensoren, die also Kräfte, Drucke, Deformationen oder Dichteänderungen messen, eine große Reihe von physikalischen Effekten, die zur Signalumsetzung geeignet sind.

Eine erste Einteilung der Sensoren ergibt sich dadurch, daß man unterscheidet, ob die Information über den Meßwert in der Faser selbst gewonnen wird, oder aber die Faser nur zur Leitung des Lichtes zu und von der Meßzelle verwendet wird. Die im Englischen üblichen Bezeichnungen "intrinsic and extrinsic sensors" werden im Deutschen meist mit "eigentliche und hybride Sensoren" wiedergegeben. Diese Einteilung deckt sich weitestgehend auch mit der Einteilung in "kontinuierliche und punktförmige Sensoren".

Eine zweite Einteilung kann nach der Art der Informationsübertragung getroffen werden. Hier gibt es vier Möglichkeiten der Übertragung: Phase, Intensität, Wellenlänge und Polarisation.

Natürlich kann man die Sensoren auch nach dem physikalischen Effekt beschreiben, der zur Umsetzung genommen wird.

Allein für die Messung von Druck oder Deformation werden favorisiert: Doppelbrechung, Piezo-optischer Effekt, Piezoabsorption und Triboluminszenz. Alle mit diesen Methoden arbeitenden Sensoren sind klein und elegant, haben aber auch wesentliche Nachteile: hohe Temperaturempfindlichkeit, Hohe Herstellungskosten und die Notwendigkeit, für jeden Einsatzbereich oder Verwendungszweck eine eigene Entwicklung durchzuführen. Daher werden im zunehmenden Maß klassische mechanische Effekte wie die Verformung von Membranen oder die Auslenkung von Spiegeln und die Reflexion von Licht un ihnen verwendet, wie sie etwa die EP 0 025 564 A, EP 0 096 262 A und US PS 4 322 979 ziegen. Alle diese Vorschläge verwenden aber noch immer sehr komplexe Aufbauten mit optischen Prismen, Linsen oder Luminiszenzstoffen.

Bisher wurden Reflexionssensoren der eingangs erwähnten Art in der Weise hergestellt, daß die optischen Fasern in ein Werkzeug eingespannt und geschliffen wurden. Die Aufnahmeblöcke für diese Fasern wurden getrennt hergestellt. Danach wurden die geschliffenen Fasern in die Blöcke eingeführt und fixiert. Bei diesen Sensoren besteht das Problem, daß ein vorgegebener Abstand zwischen der Endfläche der optischen Faser und der reflektierenden Fläche möglichst genau eingehalten werden muß um die gewünschten Eigenschaften des Sensors erreichen zu können. Da die Abstände sich im Bereich von kleinen Bruchteilen von Millimetern bewegen, ergeben sich dabei naturgemäß große Schwierigkeiten.

Ein weiteres Problem bei der Herstellung solcher Sensoren liegt darin, daß es beim Schleifen der Stirnflächen der optischen Faser leicht zu einem Ausbrechen des Randes der Stirnfläche kommen kann, wodurch sich die Ein- und Auskoppelung des durch die Faser geleiteten Lichtes wesentlich verändern kann. Dies bedeutet in der Praxis, daß die Sensoren einer Serie sich in ihren Eigenschaften oft erheblich voneinander unterscheiden.

Weiters wurde durch die US—A3 530 082 ein Sensor bekannt, bei dem mehrere optische Fasern einen Ring durchsetzen und in ihrer Lage mittels weiteren Fasern zwischen der Innenwand des Ringes und den optischen Fasern eingeklemmt sind. Dabei ergibt sich allerdings der Nachteil, das die Ringe sehr genau gefertigt werden und aus einem Material hergestellt sein müssen, dessen Wärmedehnungskoeffizient jenem des Fasermaterial entspricht. Trotzdem ergibt sich dabei deine besonderes gute Haltung der optischen Fasern.

Ziel der Erfindung ist es, diese Nachteile, zu vermeiden und ein Verfahren zur Herstellung eines Reflexionssensors vorzuschlagen, daß sich durch besondere Einfachheit auszeichnet und eine weitgehende Gleichheit der Charakteristika der danach erzeugten Sensoren sicherstellt.

Erfindungsgemäß wird dies dadurch erreicht, daß die optische Faser in eine Durchgangsbohrung des Blocks eingeführt und in dieser durch Eingießen, Einkleben oder Einkitten fixiert und nach dem Erhärten dieser Massen gemeinsam mit der Stirnseite des Blockes geschliffen wird.

Durch diese Maßnahme wird erreicht, daß die optische Faser, bzw. deren Kern fest vom Block bzw. der sie mit diesem verbindenden Masse umschlossen ist und es daher beim gemeinsamen Schleifen der Faser und der Stirnseite des Blockes zu keinem Ausbrechen des Randes der Stirnfläche der optischen Faser kommen kann. Außerdem wird dadurch auch ein völlig ebener Abschluß der Faser mit der Stirnfläche des Blokkes sichergestellt, wodurch sich die Einstellung der Stirnfläche der Faser gegenüßer der reflektierenden Fläche wesentlich erleichtert. Dies ist dadurch bedingt, daß der Block als Ganzes wesentlich leichter zu handhaben ist als der Kern der optischen Faser, dessen Durchmesser in der Regel im Bereich zwischen 50 und 200 µm liegt.

Solche Sensoren können in der Weise verwendet werden, daß über die optische Faser Licht gegen die reflektierende Fläche gestrahlt wird und daß reflektierte Licht über dieselbe optische Faser einer Auswerteschaltung zugeführt wird. Kommt es dabei aufgrund eines Meßeffektes zu Änderungen des Abstandes zwischen der Stirnfläche der optischen Faser und der reflektierenden Fläche so ändert sich dadurch auch der Grad der Einkopplung des reflektierenden Lichts. Durch eine entsprechende Auswerteschaltung, die in herkömmlicher Weise ausgebildet sein kann, können diese Änderungen erfaßt und ausgewertet werden. Je nach der Ausbildung der Blöcke können sowohl mechanische Schwingungen sowie Abstände und auch magnetische Schwingungen und Felder erfaßt werden.

Die Änderung der Einkopplung des reflektierten Lichtes hängt bei gleicher absoluter Änderung des Abstandes der Stirnfläche der optischen Faser von der reflektierten Fläche stark vom Abstand dieser beiden Flächen ab. Dabei wird die Änderung der Einkopplung mit kleiner werdendem Abstand dieser beiden Flächen größer.

Um nun Sensoren auf einfache Weise herstellung zu können, die sich durch einen besonders kleinen Abstand zwischen der Stirnfläche der optischen Faser und der reflektierenden Fläche auszeichnen, kann nach einem weiteren Merkmal der Erfindung vorgesehen sein, daß bei dem gemeinsamen Schleifen der Stirnseite der optischen Faser und des Blockes dieser im Bereich der Faser konkav ausgeschliffen wird.

Auf diese Weise wird ein kleiner Abstand zwischen der Stirnfläche des Kernes der optischen Faser und dem Rand der Stirnseite des Blockes sichergestellt. Es ist daher möglich einfach eine elastische Membrane über den Rand der Stirnfläche des Blockes zu spannen. Dieser Hohlschliff kann mit einem einfachen Wirkzeug exakt hergestellt werden.

In diesem Zusammenhang ist es besonders vorteilhaft, wenn der die optische Faser haltende Block einen sich über seine gesamte, der reflektierenden Fläche gegenüberliegenden Stirnseite erstreckenden Hohlschliff aufweist. Dadurch wird erreicht, daß sich die einzelnen Sensoren einer Serie nur wenig voneinander unterscheiden, da der Abstand zwischen der Stirnfläche der optischen Faser und der reflektierenden Fläche, falls über den Rand der Stirnfläche eine Membrane gespannt wird, oder dieser Rand an einem die reflektierenden Fläche aufweisenden Körper anlegt, allein durch die Tiefe des Hohlschliffes bestimmt ist. Diese hängt aber im wesentlichen von dem verwendeten Werkzeug ab und weniger von der eher heiklen Einstellung desselben gegenüber dem zu bearbeitenden Block. Diese Gleichheit der Sensoren einer Serie erlaubt es aber, auf die bei den nach dem vorbekannten Verfahren hergestellten Sensoren notwendigen, sehr aufwendigen Justierungen zum Abgleich der verschiedenen Charakteristika der Sensoren einer Serie weitgehend zu verzichten. Bei den heute zumeist verwendeten optischen Fasern mit einer weichen Außenhülle ist es vorteilhaft, wenn die optische Faser in deren in den Block einzuführenden Ende vor dem Einführen in den Block von ihrer Außenhülle bis auf die den Kern umgebende Reflexionsschichte befreit wird.

Dadurch wird sichergestellt, daß es bei den optischen Fasern, deren Kern fest im Block gehalten wird, beim Schleifen zu keinem Ausbrechen des Randes der Stirnfläche des Kernes kommen kann.

Nach einem weiteren Merkmal der Erfindung wird ein nach dem erfindungsgemäßen Verfahren hergestellter faseroptischer Sensor, insbesondere Schwingungs- oder Klopfsensor vorgeschlagen, der mindestens eine das Licht zu einer reflektierenden Fläche oder einer Membran leitende Faser aufweist, die das Licht nach erfolgter Reflexion wieder einfängt und einer weiteren Verarbeitung zuleitet, wobei die optische Faser an ihrer Stirnseite geschliffen und in ihrem einen Endbereich in einer Durchgangsbohrung eines Blocks über eine erhärtete Masse fixiert und die reflektierende Fläche in einem bestimmten Abstand von der dieser zugekehrten Stirnfläche der optischen Faser angebracht ist, wobei der Abstand der Stirnfläche von der dieser gegenüberliegenden reflektierenden Fläche in an sich bekannter Weise eine mit dem Durchmesser des Kerns der optischen Faser vergleichbare Größe aufweist und daß dieser Abstand nicht wesentlich größer als die maximale Amplitude der gegenseitigen Bewegung der reflektierenden Fläche gegenüber der Stirnfläche der optischen Faser ist. Bei einem solchen Sensor ergibt sich der Vorteil, daß bereits kleine Änderungen des Abstandes zwischen der Stirnfläche der optischen Faser und der reflektierenden Fläche zu einer großen Änderung des Grades der Einkoppelung des reflektierten Lichtes führt.

Dabei ist es besonders vorteilhaft, wenn der Abstand der Stirnfläche der optischen Faser von der reflektierenden Fläche kleiner als 100 μm ist. Dabei ergibt sich eine relativ steile Kennlinie der Änderung der Einkopplung über der Änderung des Abstandes dieser beiden Flächen, wodurch eine einfache und sichere Auswertung auch sehr kleiner Schwingungen ohne weiteres möglich ist.

Zur Erzielung eines besonders weitgehenden Schutzes des empfindlichen Endbereiches einer optischen Faser kann weiters vorgesehen sein, daß die Bohrung des Blickes an seiner von der reflektierenden Oberfläche abgekehrten Seite einen größeren Durchmesser aufweist und in diesem, den größeren Durchmesser aufweisenden Bereich der Bohrung die optische Faser mitsamt ihrer Außenhülle eingegossen, eingekittet oder eingeklebt ist. Damit wird die Außenhülle der optischen Faser in deren Endbereich sicher behalten, sodaß es zu keinem Abknicken und damit zu keiner Beschädigung des Kernes der optischen Faser im Anschlußbereich des Blockes kommen kann.

Nach einem weiteren Merkmal der Erfindung kann vorgesehen sein, daß die reflektierende Fläche an einer Membrane angeordnet ist. Dadurch ergibt sich ein sehr einfacher Aufbau eines erfindungsgemäßen Sensors, da diese Membrane, falls die Stirnfläche des Blockes im Bereich der optischen Faser mit einem Hohlschliff versehen ist, einfach über die Stirnfläche des Blockes gespannt werden kann. Auf die Membrane einwirkende Schwingungen führen dabei im Bereich des Hohlschliffes zu einer Änderung des Abstandes zwischen der Membrane und der Stirnfläche der optischen Faser.

Für die Erfassung von dynamischen Vorgängen ist es zweckmäßig, wenn die Achsen der im Block fixierten optischen Faser und der Membrane parallel, vorzugsweise koaxial zueinander ausgerichtet sind. Dies ermöglicht auch eine einfache Herstellung.

Weiters kann dabei vorgesehen sein, daß die im Block gehaltene optische Faser gegenüber der Achse des konkaven Anschliffs versetzt angeordnet ist. Dadurch ergibt sich eine Neigung der Stirnfläche der Faser gegenüber der Ebene der reflektierenden Fläche. Dies führt zu einer Versteilerung der Kurve der Änderung der Einkopplung des reflektierten Lichtes gegenüber der Änderung des Abstandes der beiden Flächen, insbesondere im Bereich des Ruheabstandes dieser beiden Flächen voneinander. Dadurch ergeben sich bereits bei sehr kleinen Änderungen des Abstandes dieser beiden Flächen große Änderungen der Einkopplung des reflektierten Lichtes. Dieser Effekt tritt besonders stark auf, wenn die Neigung der Stirnfläche der optischen Faser gegen die Membranebene im wesentlichen jenem Winkel entspricht, unter dem das Licht gegen die Faserachse geneigt in die Faser eintreten kann, um durch diese weitergeleitet werden zu können (halber Akzeptanzwinkel).

Eine besonders zweckmäßige Ausführungsform eines erfindungsgemäßen Reflexionssensors, zeichnet sich dadurch aus, daß die Membrane auf dem plan geschliffenen Bereich der Stirnfläche des Blockes aufgeklebt, aufgekittet oder aufgepreßt ist, wobei in der Stirnfläche des Blockes im Bereich der optischen Faser ein konkaver Anschliff vorhanden ist.

Eine besonders weitgehende Versteilerung dieser Kurve ergibt sich, wenn, die reflektierende Fläche matt glänzend ist und einen großen difusen oder inkohärenten Reflexionskoeffizienten für die Wellenlänge des durch die optische Faser geleiteten Lichtes aufweist.

In diesem Zusammenhang ist es zweckmäßig wenn die Oberflächenrauhigkeit der diffus reflektierenden Fläche kleiner als 1 µm ist. Dadurch wird eine genügende Streuung des reflektierten Lichtes erreicht, wobei trotzdem die Oberflächenrauhigkeit noch genügend klein gegenüber dem Abstand zwischen der Stirnfläche und der reflektierenden Fläche bzw. der durch die zu erfassenden Schwingungen bedingten Änderung dieses Abstandes ist, sodaß dadurch keine nennenswerten Veränderungen im Meßergebnis zustande kommen.

Besonders günstige Verhältnisse ergeben sich wenn, der Abstand der Stirnseite der optischen Faser von der reflektierenden Fläche gleich dem Durchmesser des Kernes der optischen Faser ist.

Für bestimmte Anwendungszwecke ist es besonders vorteilhaft, wenn der mit dem dreifachen Sinus des Akzeptanzwinkels der optischen Faser multiplizierte Abstand der Stirnseite der optischen Faser von der reflektierenden Fläche kleiner als der Durchmesser des Kernes der Faser ist.

Um Schwingungen die in einem eher engen Frequenzband liegen besonders gut nachweisen zu können, kann weiters vorgesehen sein, daß die Eigenfrequenz der Membrane mit der bevorzugt nachzuweisenden Frequenz übereinstimmt. Dadurch kommt es zu Resonanzerscheinungen, die zu entsprechend großen Ausschlägen der Membran und daher zu großen Änderungen in der Einkopplung des reflektierten Lichtes führen. Aufgrund des ebenen Abschlusses der Stirnfläche der optischen Faser mit dem diese umgebenen Bereichen der Stirnfläche des Blockes, stört es nicht besonders, wenn es zu einem Anschlagen der Membrane an der Stirnfläche der optischen Faser kommt. Zumindest führt dies nicht zu einer Beschädigung des Sensors, sondern lediglich zu einem Verfälschen des Meßergebnisses, falls die Amplitude der zu messenden Schwingung gemessen werden soll.

Eins weitere Möglichkeit der Auslegung eines erfindungsgemäßen Sensors liegt auch darin, daß die Eigenfrequenz der Membrane weite außerhalb des Frequenzbandes der zu messenden Schwingung liegt. Dies ist besonders dann von Vorteil, wenn die Amplitude dieser Schwingungen quantitativ erfaßt werden soll.

Weiters kann vorgesehen sein, daß die Membrane eine starke Dämpfung aufweist, wodurch ein überschwingen der Membrane bei der Erfassung von sich in ihrer Frequenz und bzw. oder Amplitude rasch ändernden Schwingungen vermieden wird.

Um insbesondere Körperschall erfassen zu können, ist es vorteilhaft, wenn der erfindungsgemäße Sensor derart aufgebaut ist, daß die reflektierende Fläche an einem starren Körper angeordnet ist und der die optische Faser haltende Block gegenüber diesem schwingend gehalten ist. Dabei wird der die reflektierende Fläche aufweisende starre Körper mit dem auf Körperschall zu untersuchenden Teil in innigem Kontakt gebracht. Durch die federnde Abstützung des die optische Faser haltenden Blockes kann dieser bei Auftreten von Körperschall gegen die reflektierende Fläche schwingen, wodurch es zu einer Änderung der Einkopplung des reflektierten Lichtes kommt. Zur federnden Abstützung der beiden Teile des Sensors eigenen sich besonders Zwischenlagen aus einem elastomeren Material, wobei die Dicke dieser Zwischenlage zweckmäßiger Weise sehr dünn gehalten ist um einen hohen Einkopplungsgrad des reflektierten Lichtes zu ermöglichen.

Um dabei eine besonders erhöhte Empfindlichkeit für bestimmte Frequenzen zu erreichen, kann dabei weiters vorgesehen sein, daß die Eigenfrequenz des gegen den, dis reflektierende Fläche aufweisenden starren Körper, schwingend gehaltenen, die optische Faser haltenden Block mit einer bevorzugt zu messenden Frequenz übereinstimmt.

Die erfindungsgemäßen Sensoren eigenen sich auch sehr gut für den Aufbau von Mikrophonen. In diesem Zusammenhang ist es vorteilhaft, wenn der die optische Faser haltende Block gemeinsam mit der diesen überspannenden elastischen Membrane elastisch federnd in einer Halterung abgestützt sind, wobei die Eigenfrequenz dieses Systems vorzugsweise weit außerhalb des bei der Messsung zu erwartenden Frequenzbandes liegt. Durch diese Maßnahmen wird erreicht, daß das Mikrophon unempfindlich gegen Schläge gegen sein Gehäuse ist und ein zu starkes Nachklingen als Folge solcher Schläge, wie sie z.B. beim Ablegen des Mikrophons auf eine harte Unterlage auftreten, vermieden wird. Außerdem sind solche Mikrophone unempfindlich gegen zu hohe Belastungen z.B. durch zu starkes Anblasen um deren Funktion zu überprüfen.

Ist eine besonders steile Kennlinie der Einkopplung des reflektierten Lichtes über der Änderung des Abstandes zwischen der Stirnfläche der optischen Faser und der reflektierenden Fläche im Bereich des Ruheabstandes dieser beiden Flächen voneinander erwünscht, so kann vorgesehen sein, daß der Austrittswinkel der Faserachse, der durch den Winkel, den die Flächennormale der Tangentialebene im Durchstoßpunkt der Faserachse der optischen Faser durch deren Stirnfläche mit dieser Faserachse einschließt, bestimmt ist, 10 bis 30° beträgt. Diese Versteilerung ist dadurch bedingt, daß ein geringerer Teil des reflektierten Lichtes eigekoppelt wird und, da sich bei einer Schwingung der Membrane deren Winkel gegenüber der Stirnfläche der optischen Faser ändert, schon geringe Auslenkungen der Membrane eine erhebliche Änderung der Einkopplung des reflektierten Lichtes mit sich bringt.

Eine besonders bevorzugte Ausführungform eines erfindungsgemäßen Sensors zeichnet sich dadurch aus, daß in dem Block mindestens zwei optische Fasern gehalten sind, deren Achsen zueinander parallel verlaufen und deren Austrittswinkeln ihrer Faserachsen 10 bis 30° beträgt, wobei die beiden Stirnseiten der optischen Fasern an zwei gegenüberliegenden Seiten der Achse der Membrane angeordnet sind. Mit einem solchen Sensor ist es möglich durch Vergleich des in jede der beiden optischen Fasern eingekoppelten reflektierten Lichtes, die Qualität der Lichtleitung, insbesondere einen durch Steckverbindungen bedingten Verlust an Lichtleitung feststellen und kompensieren zu können. Insbesondere kann das Aussetzen des durch das in der einen Faser geleitetn reflektierten Lichtes bedingten Signales zur Kalibration der zweiten Faser verwendet werden. Weiters ist es mit solchen Sensoren auch möglich, sehr niederfrequente Schwingungen und auch quasi-stationäre Suständen erfassen zu können. Eine solche Messung von quasi-stationären Zuständen kann dabei durch eine Differenz- oder Quotientenmessung des in beiden optischen Fasern eingekoppelten Lichtes erfolgen. Außerdem ist es auch möglich den Sensor auf seine Funktion hin zu kontrollieren, wobei dies am einfachsten dadurch erfolgen kann, daß die Membrane in eine kontrollierte Null-Lage gebracht wird und die Differenz des in beiden Fasern eingekoppelten Lichtes gemessen wird.

Eine weitere mögliche Ausführungsform eines erfindungsgemäßen Reflexionssensors zeichnet sich dadurch aus, daß der die optische Faser(n) haltende Block gegen einen gleich schweren, die reflektierende Fläche aufweisenden Block federnd gelagert ist, wobei die Eigenfrequenz dieses Systems gleich der nachzuweisenden Frequenz oder des Doppelten der nachzuweisenden Frequenzen ist und die einander gegenüberliegenden Flächen der beiden Blöcke parallel zueinander verlaufen. Durch diese Maßnahmen wird eine besonders hohe Empfindlichkeit in einem bestimmten relativ engen Frequenzband erreicht.

In diesem Zusammenhang ist es vorteilhaft, wenn der Abstand zwischen den beiden Blöcken weniger als 100 μm betragt. Dadurch wird ein sehr hohes Maß an Einkopplung des reflektierten Lichtes sichergestellt.

Soll die Empfindlichkeit eines solchen Sensors besonders im Bereich hoher Frequenzen liegen, so kann vorgesehen sein, daß die beiden Blöcke federnd gegen eine Halterung abgestützt sind, wobei die zwischen den beiden Blöcken wirkende Federkraft wesentlich größer als die zwischen den Blöcken und der Halterung wirkende Federkraft ist.

Soll ein solcher Sensor dagegen eher im Bereich tiefer Frequenzen seine höchste Empfindlichkeit aufweisen, so ist es zweckmäßig, wenn die beiden Blöcke federnd gegen eine Halterung abgestützt wind, wobei die zwischen den beiden Blöcken wirkende Federkraft wesentlich kleiner als die zwischen den Blöcken und der Halterung wirkende Federkraft ist.

Durch entsprechende Abstimmung der Federkräfte dieser beiden Federsysteme kann die höchste Empfindlichkeit eines solchen Sensors auf einen beliebigen Frequenzbereich in verlegt werden, wobei durch die Auswahl sehr unterschiedlicher Federkräfte die Bandbreite des Sensors sehr eng gehalten werden kann.

Nach einem weiteren Merkmal der Erfindung ist vorgesehen, daß beiden Blöcke aus einem magnetisierbaren Material hergestellt sind. Auf diese Weise ist es möglich, auch magnetische Schwingungen oder Felder zu erfassen. Dies ist aufgrund der Induktion in den magnetisierbaren Materialien bedingt, sodaß es zu Änderungen des Abstandes zwischen der Stirnfläche der optischen Faser und der reflektierenden Fläche kommt, wenn die Blöcke einen Magnetfeld ausgesetzt werden.

Um die räumliche Orientierung von Schwingungen erfassen zu können, kann gemäß einer bevorzugten Ausführungsform der Erfindung vorgesehen sein, daß mehrere Blockpaare zu einer Einheit zusammengebaut sind, wobei die optischen Fasern im wesentlichen in drei zueinander senkrechten Richtungen in den entsprechenden Blöcken geführt sind. Je nach der Art der zu erfassenden Schwingungen können die Blöcke aus verschiedenen Materialien hergestellt sein, wobei allerdings zur Erfassung magnetischer Schwingungen die Blöcke zweckmäßigerweise aus einem magnetisierbaren Material hergestellt sind.

Für die Erfassung von Schall- oder anderer Druckwellen ist es dagegen vorteilhafter, wenn die die optischen Fasern haltenden Blöcke aus Keramik oder Glas, vorzugsweise Quarzglas bestehen, wobei das Material des Blockes Licht stark absorbiert. Die Wahl des Materials für den Block ist vor allem dadurch bedingt, daß diese Materialien ein ähnliches Schleifverhalten aufweisen wie der Kern der optischen Faser.

Für Anwendungen bei denen der Sensor erheblichen Temperaturänderungen ausgesetzt ist, ist es zur Vermeidung von Meßfehlern, insbesondere bei der Erfassung der Amplituden der zu messenden Schwingungen vorteilhaft, wenn die optische Faser bzw. Fasern und der sie haltende Block ähnliche Temperaturkoeffizienten aufweisen, wodurch Temperaturspannungen weitgehend vermieden werden.

Um bei der Erfassung von Schwingungen mit einem Frequenzgemisch die Empfindlichkeit in verschiedenen Frequenzbereichen festlegen zu können, und bzw. oder die Empfindlichkeit über einen großen Amplitudenbereich ausdehnen zu können, kann weiters vorgesehen sein, daß mehrere, die optischen Fasern haltende Blöcke zu einer Einheit zusammengefaßt sind und die optischen Fasern, vorzugsweise über einen Strahlenteiler von einer Lichtquelle beaufschlagbar sind. Dadurch ist es möglich Sensoren mit Membranen mit verschiedenen Durchmessern oder Steifigkeiten miteinander zu koppeln.

Zur Erfassung von räumlichen Schwingungen mit wählbarer Empfindlichkeit in verschiedenen Richtungen kann weiters vorgesehen sein, daß mehrere Blöcke bzw. die in diesen gehaltenen optischen Fasern nach verschiedenen Richtungen verlaufen und vorzugsweise über einen Strahlteiler von einer Lichtquelle beaufschlagbar sind.

Eine weitere Möglichkeit der Steuerung der Empfindlichkeit eines solchen kombinierten Sensor ergibt sich dadurch, daß die die optischen Fasern haltenden Blöcke unterschiedlich große Massen aufweisen. Damit wird ein unterschiedliches Ansprechen auf verschiedene Frequenzen erreicht.

Ein Vorteil des erfindungsgemäßen Sensors liegt neben seiner Unempfindlichkeit gegen extreme Belastungen durch die zu erfassenden Schwingungen auch darin, daß deren Kennlinie leicht beeinflußbar ist. So kann z.B. bei den Ausführungsformen mit einer einen Block überspannenden Membrane eine zunehmend flachere Kennlinie z.B. für den Schalldruck dadurch erreicht werden, daß der Luftraum zwischen dem Boden des Hohlschliffs und der Membrane praktisch dicht abgeschlossen bleibt. Ist eine solche Abflachung nicht erwünscht, so kann für diesen Luftraum ein Entlüftungskanal vorgesehen werden, wobei durch die Ausgestaltung des Kanals auf den Frequenzgang Einfluß genommen werden kann, z.B. um durch Wahl eines kleinen Durchmessers dieses Kanales eine relative Anhebung der tiefen Frequenzen zu erreichen.

Die Erfindung wird nun an Hand der Zeichnung näher erläutert. Dabei zeigt

Fig. 1 ein Diagramm des Verhältnisses des in die optische Faser eines erfindungsgemäßen Sensors eingekoppelten reflektierten Lichtes im Verhältnis zum ausgesandten als Funktion des Abstandes zwischen der Stirnfläche der optischen Faser und der reflektierenden Fläche;

Fig. 2 eine erste Ausführungsform eines erfindungsgemäßen Sensors im Schnitt;

Fig. 3 eine insbesondere als Klopfsensor geeignete Ausführungsform der Erfindung;

Fig. 4 eine weitere Ausführungsform eines erfindungsgemäßen Sensors;

Fig. 5 eine weitere Ausführungsform eines erfindungsgemäßen Sensors, der sich für die Erfassung von Schwingungen mit sehr niedriger Frequenz oder quasi-stationärer Zustände geeignet ist;

Fig. 6 einen der Ausführungsform gemäß Fig. 2 ähnlichen Sensor;

Fig. 7 einen Sensor, der besonders für die Erfassung von Körperschall oder als Näherungssensor geeignet ist;

Fig. 8 einen Sensor der sich besonders für die Verwendung in einem Mikrophon eignet;

Fig. 9 einen Sensor der für die Erfassung quasistationärer Zustände geeignet ist;

Fig. 10 einen Sensor der für die Erfassung räumlicher Schwingungen geeignet ist;

Fig. 11 eine Sensoranordnung die besonders für Mikrophone geeignet ist;

Fig. 12 eine Sensoranordnung die sich durch einen großen Dynamikbereich oder einen großen Frequenzbereich auszeichnet und

Fig. 13 einen Sensor, der einfach in Serie mit geringer Streuung herstellbar.

Fig. 14 einen Sensor, der mit einem Schwellwertverhalten betreibbar ist.

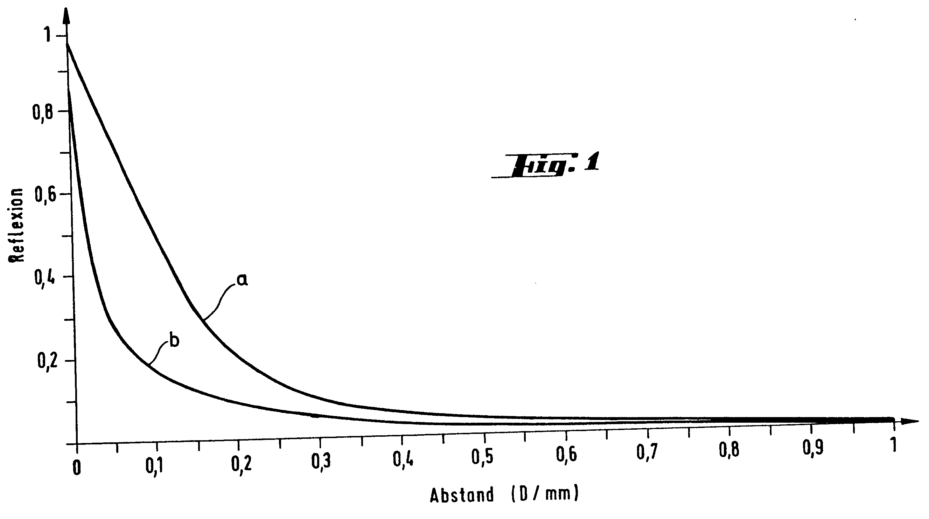

In der Fig. 1 zeigt die Kurve a die Verhältnisse bei einer hoch reflektierenden bzw. kohärent reflektierenden Fläche. Aus dieser ist zu ersehen, daß bei sehr kleinen Abständen zwischen der Stirnfläche der optischen Faser und der reflektierenden Fläche eine geringe Änderung des Abstandes eine beträchtliche Änderung der Einkopplung des reflektierten Lichtes mit sich bringt. Dabei ergeben sich bei üblichen Fasern mit einem stufenförmig verlaufenden Brechungsindex (Stufenindexfaser) bis zu einem Abstand von ca. 100 µm nahezu lineare Verhältnisse. Außerdem ist zu ersehen, daß bis zu diesem Bereich ein hohes Maß an Einkopplung gegeben ist, sodaß die nachzuweisende reflektierte und eingekoppelte Lichtmenge immer weite über die Rayleigh-Rückstreuung der optischen Faser und der Fresnel-Reflektion bei der Einkopplung und bei der Auskopplung liegt. Damit ergibt sich ein großer Abstand zwischen den auszuwertenden Nutzsignalen und den aufgrund der Rückstreuung und der Fresnelreflektion bedingten Störsignalen. Dies ermöglicht eine sehr exakte Messung von Schwingungen mit sehr kleinen durch die Messung bedingten Fehlern.

Die Kurve b in Fig. 1 zeigt die Verhältnisse bei einer diffus bzw. inkohärent reflektierenden Fläche. Bei einer solchen ergibt sich eine besonders steile Kennlinie. Allerdings ist dabei der im wesentlichen lineare Bereich auf einen Bereich des Abstandes zwischen der Stirnfläche der optischen Faser und der reflektierenden Fläche von etwa 20 μm eingeschränkt.

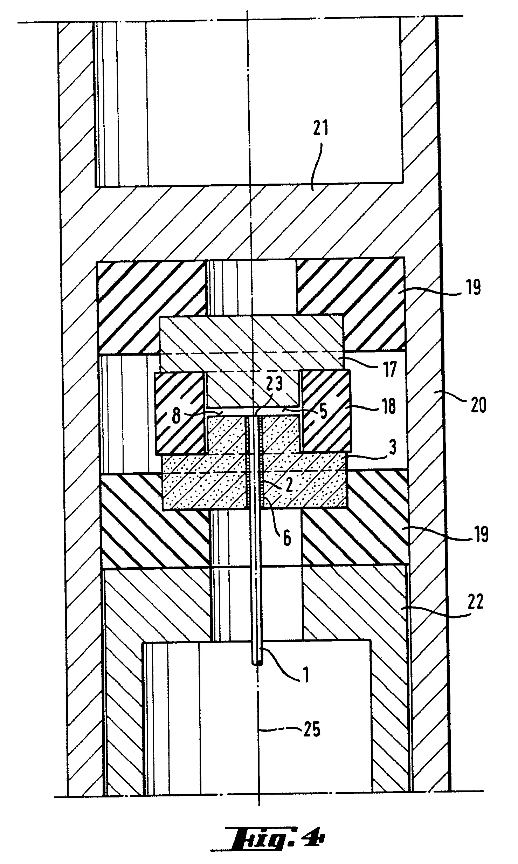

Bei den erfindungsgemäßen Sensoren ist daher die möglichst genaue Einhaltung sehr kleiner Abstände von entscheidender Bedeutung. Dies läßt sich am einfachsten dadurch bewerkstelligen, daß die optische Faser, bzw. deren eigentlicher Kern (core) samt seiner Ummantelung (Reflexionsschichte) (cladding) 1', die im weiteren gemeinsam kurz als "Kern" 1 bezeichnet werden, in einen eine den Kern der optischen Faser entsprechende Bohrung aufweisenden Block eingeführt und in diesen eingekittet, eingegossen oder eingeklebt wird. Diese Reflexionsschichte weist einen gegenüber dem eigentlichen Kern verschiedenen Brechungsindex auf (Fig. 6).

Für die Fixierung des Kernes im Block 3 werden weitgehend starr aushärtende Massen, wie z.B. Epoxidharze oder lösungsmittelfreie Kleber, aber auch anärob aushärtende Massen, wie sie z.B. unter den Handelsnamen "Loctite" vertrieben werden, verwendet. Nach dem Aushärten dieser Massen wird die Stirnfläche des Blockes, aus der der Kern der optischen Faser geringfügig vorragen kann, gemeinsam mit diesem geschliffen.

Um die notigen sehr kleinen Abstände zwischen der Stirnfläche der optischen Faser und der reflektierenden Fläche reproduzierbar einhalten zu können, kann der Bereich der Stirnfläche des Blockes, in dem sich die optische Faser befindet konkav ausgeschliffen werden.

Eine solche Ausführungsform zeigt die Fig. 2. Dabei ist der Block, der aus Glas, vorzugsweise Quarzglas, Keramik, aber für verschiedene Anwendungszwecke, insbesondere zur Erfassung magnetischer Schwingungen oder Felder auch aus einem magnetisierbaren Material bestehen kann, mit der Bezugsziffer 3 versehen. Dieser Block 3 weist eine Bohrung 6 auf, deren Durchmesser etwas größer als der Durchmesser des Kernes 1 der optischen Faser 7 ist. In dieser Bohrung 6 ist der Kern 1 durch eine erhärtete Masse 2, wie z.B. Epoxidharz oder dergleichen gehalten und von dieser Masse rundum umgeben. Die Stirnfläche 8 des Blockes 3 wurde gemeinsam mit dem Kern 1 der optischen Faser 7, welcher mittels einer erhärteten Masse im Block 3 fixiert ist, plan geschliffen und danach im Bereich des Kernes der optischen Faser hohl ausgeschliffen. Dies kann nach einem bei der Herstellung optischer Bauteile üblichen Verfahren durchgeführt werden. Die Tiefe dieses Hohlschliffs 4 bestimmt im wesentlichen den Abstand der Stirnfläche des Kernes 1 von der reflektierenden Fläche 5, die z.B. an einer die Stirnfläche 8 des Blockes 1 überspannenden Membrane 9 angeordnet sein kann.

Bei der in Fig. 2 dargestellten Ausführungsform ist die Außenhülle (coating) 10 der optischen Faser 7 in deren Endbereich entfernt, sodaß lediglich deren Kern 1 in die Bohrung 6 des Blockes 3 eingeführt ist. Dies ist besonders bei optischen Fasern mit einer weichen Außenhülle angebracht, um eine Bewegungsmöglichkeit des Kernes während des Schleifens zu vermeiden, da dies unter Umständen zu einem Ausbrechen im Randbereich des Kernes 1 führen könnte. Dies würde zu Änderungen beim Austritt des Lichtes aus der optischen Faser und beim Einkoppeln des reflektierten Lichtes führen.

Die verspiegelte Membrane 9 ist über den Hohlschliff 4 gespannt und an ihren Rändern mit dem plan geschliffenen Bereich der Stirnfläche 8 des Blockes 3 fest verbunden z.B. verklebt. Der Hohlschliff ist in der Fig. 2 übertrieben dargestellt und weist bei verwendung von üblichen optischen Fasern mit einem Durchmesser des eigentlichen Kerns (core) im Bereich von 50 bis 200 μm eine maximale Tiefe in der Größenordnung des Durchmesser des Kernes der optischen Faser auf. Vorzugsweise beträgt diese Tiefe bei hochglanzverspiegelten Membranen 9 weniger als 100 μm und für diffus reflektierende Membranen weniger als 20 μm auf. Dadurch wird erreicht, daß der Sensor in seinem empfindlichsten Bereich arbeitet, in dem überdies noch weitgehend lineare Verhältnisse gegeben sind.

Die Fig. 3 zeigt eine Ausführungsform die besonders als Klopfsensor für Verbrennungskraftmaschinen geeignet sind. Bei dieser Ausführungsform weist der Block 3 an seiner von der Membran 9 abgekehrten Seite eine Ansenkung 11 auf, in die die Außenhülle 10 der optischen Faser 7 eingeführt und mit einer erhärteten Masse 2 mit dem Block 3 verbunden ist. Diese erhärtete Masse 2 hält auch den Kern 1 der optischen Faser, wie bereits an Hand der Fig. 2 erläutert, fest. Die Stirnfläche 8 ist bei diesem Sensor durchgehend plan geschliffen und die Membrane 9, die aufgrund der bei Verbrennungskraftmaschinen auftretenden starken Schwingungen entsprechend robust ausgeführt ist, ist mit einer Halterung 12 verschweißt. Dabei muß die Membrane so gewählt sein, daß sie dem auftretenden Verbrennungsdruck standhalten kann. Die Halterung 12 ist zweckmäßigerweise so ausgebildet, daß die ähnlich einer Zündkerze in den Verbrennungsraum der Verbrennungskraftmaschine eingeschraubt werden kann.

Durch die Einführung und Fixierung der Außenhülle 10 in die Ansenkung der Bohrung 6 des Blockes 3 wird ein hohes Maß an Bruchsicherheit der optischen Faser 7 erreicht. Dabei ist aber im Bereich der der Membrane 9, die die reflektierende Fläche aufweist, gegenüberliegenden Stirnseite der Kern 1 ohne die Außenhülle 10 fixiert.

Der rotationssymmetrische Block 3, der aus Gründen eines möglichst gleichen Schleifverhaltens wie der Kern der optischen Faser 7 zweckmäßigerweise aus dunklem Quarzglas besteht, weist

7

an seinem einem Endbereich eine Schulter 13 auf, mit der er an einem hülsenartigen Ansatz 14 der Membrane anliegt und mit dieser verbunden ist. Zur weiteren Abstützung der optischen Faser in der Halterung 12 ist noch ein hülsenförmiger Stützkörper 15 vorgesehen, der auch zur Ableitung der Wärme von der optischen Faser 7 dient.

Die Fig. 4 zeigt einen insbesondere für die Erfassung von Körperschall geeigneten Sensor. Bei diesem ist neben dem den Kern 1 der optischen Faser 7 haltenden Block 3 ein weiterer, die gleiche Masse aufweisender Block 17 vorgesehen, der an seiner den Block 3 gegenüberliegenden Stirnseite die reflektierende Fläche 5 aufweist. Die beiden Blöcke 17 und 3 sind über einen Ring 18 aus einem elastomeren Material miteinander verbunden. Die Federkraft dieses Ringes 18 bestimmt mit den Massen der beiden Blöcke 3 und 17 eine Eigenfrequenz dieses Systems, die mit der selektiv zu messenden Frequenz übereinstimmt oder vorzugsweise deren doppelten Wert aufweist. Die beiden Blöcke sind durch weitere Ringe 19 aus einem elastomeren Material mit dem Gehäuse 20 des Sensors verbunden. Die Federkraft der die Blöcke mit den Gehäuse verbindenden Ringe 19 ist deutlich kleiner als jene des die beiden Blöcke verbindenden Ringes 18. Dadurch ist die äußere Kopplung der Blöcke über das Gehäuse 20 schwach genug um nur zur Anregung der Schwingung beider Blöcke 3 und 17 gegeneinander dienen zu können.

Durch die Formgebung des Gehäuses des Sensors, das im wesentlichen durch ein dünnes Rohr gebildet ist, das nur longitudinale Schallwellen bis zu dem Steg 21 und der Verschraubung 22 und damit zu den beiden ein Schwingsystem bildenden Blöcken 3 und 17 läßt, wird die Richtungscharakteristik dieses Sensors erhöht. Das Rohr ist dabei so bemessen, daß seine Beigeschwingung weit von der Eigenfrequenz oder einer Harmonischen dieses Systems entfernt ist. Dadurch werden von den beiden Blöcken praktisch nur die in Längsrichtung des Gehäuses laufenden Schallwellen aufgenommen. Diese führen zu einer Änderung des Abstandes zwischen den Stirnflächen der beiden Blöcke 3 und 17, die sich in einer Änderung der Einkopplung des von der reflektierenden Fläche 5 des Blockes 17 reflektierten Lichtes bemerkbar macht.

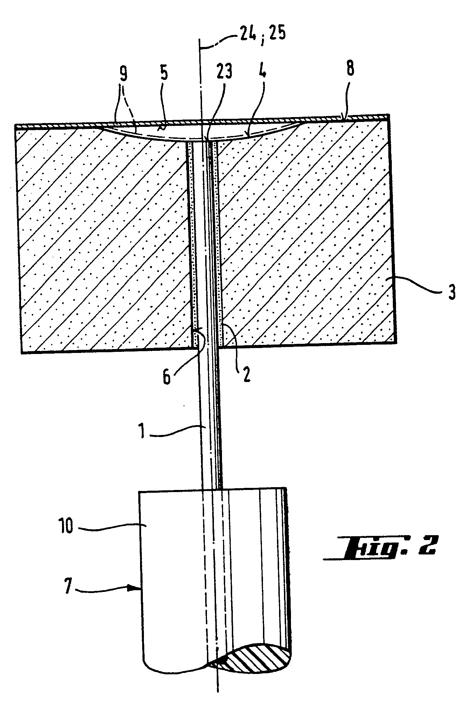

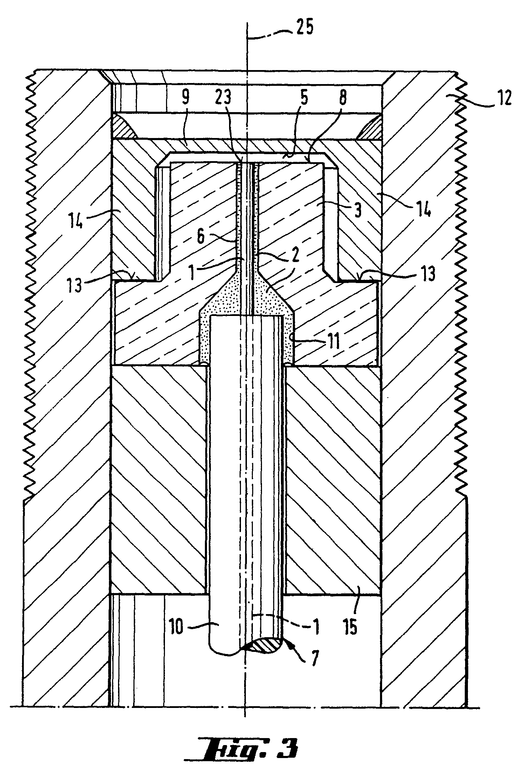

Bei dem Sensor gemäß Fig. 5 sind zwei optische Fasern 7 mit deren Kernen 1 in einem Block 3 mittels der erhärteten Masse 2 in den Bohrungen 6 fixiert. Die Stirnfläche 8 des Blockes 3 weist einen Hohlschliff 4 auf, der sich über den Bereich der Stirnflächen 23 der Kerne 1 der beiden optischen Fasern 7 erstreckt. Dabei verläuft die eine der beiden Fasern 7 koaxial mit der Achse 24 des Hohlschliffs 4 und die andere distanziert von der ersteren. Die Stirnfläche der anderen optischen Faser weist daher eine Neigung gegen die an der Membrane 9 befindliche reflektierende Fläche 5 auf. Anders ausgedrückt schließt die Flächennormale 26 der Tangentialebene im Durchstoßpunkt der Faserachse 25 der optischen Faser 7 durch deren Stirnfläche 23 mit dieser Faserachse 25 einen Austrittswinkel ß eine. Dieser Austrittswinkel beträgt dabei zweckmäßigerweise zwischen 10 und 30°.

Durch diese Neigung der Stirnfläche der optischen Faser ergibt sich eine Versteilerung der Kennlinie des Sensors, insbesondere im Bereich des Ruheabstandes der Stirnflächen der Fasern und der reflektierenden Fläche 5. Die Membrane 9 ist auch bei dieser Ausführungsform auf die Stirnfläche des Blockes 3 aufgeklebt. Die Tiefe des Hohlschliffs 4 ist ebenso, wie bei der Ausführungsform gemäß der Fig. 2, so bemessen, daß der Abstand der Stirnflächen der Fasern 7 von der reflektierenden Fläche 5 im wesentlichen dem Durchmesser des Kernes 1 der Fasern entspricht und die maximale Auslenkung der Membran nahezu diesem Abstand entspricht, wie dies in Fig. 2 strichliert angedeutet ist.

Mit einem solchen Sensor ist es möglich durch Vergleich des in jede der beiden optischen Fasern eingekoppelten reflektierten Lichtes, die Qualität der Lichtleitung, insbesondere einen durch Steckverbindungen bedingten Verlust an Lichtleitung feststellen und kompensieren zu können. Weiters ist es mit solchen Sensoren auch möglich, sehr niederfrequente Schwingungen und auch quasistationäre Zustände erfassen zu können. Eine solche Messung von quasi-stationären Zuständen kann dabei durch eine Differenz- oder Quotientenmessung des in beiden optischen Fasern eingekoppelten Lichtes erfolgen. Außerdem ist es auch möglich den Sensor auf seine Funktion hin zu kontrollieren, wobei dies am einfachsten dadurch erfolgen kann, daß die Membrane in eine kontrollierte Null-Lage gebracht wird und die Differenz des in beiden Fasern eingekoppelten Lichtes zu messen.

Es ist mit einem Sensor nach der Fig. 5 auch möglich, beim Aussetzen des durch das in der außerhalb der Achse des Blockes 3 angeordneten optischen Faser 3 geführten reflektierten Lichtes bedingten Signales, was bei einer genau definierten Membrankrümmung bzw. -stellung der Fall ist, die Auswertung des von der zentral angeordneten Faser 3 gelieferten, dem reflektierten Licht entsprechenden Signales zu kalibrieren.

Bei dar Ausführungsform gemäß Fig. 6 ist die optische Faser 7 bzw. deren Kern 1 ebenfalls in einer Bohrung 6 des Blockes 3 mittels einer erhärteten Masse 3 gehalten. Der eigentliche Kern (core) weist, wie bei einer optischen Faser üblich eine Reflektionsschichte 1' (Ummantelung, cladding) auf, die sich in ihrem Brechungsindex gegenüber jenes des übrigen Teiles des Kernes 1 unterscheidet. Der Abstand der plan geschliffenen Stirnseite des Blockes 3 und des Kernes 1 weist in der Ruhestellung der Membrane 9, die die reflektierende Fläche 5 aufweist, einen Abstand auf, der kleiner als der Durchmesser des Kernes 1 der optischen Faser 7 ist.

In der Fig. 6 ist auch der halbe Akzeptanzwinkel α/2 eingezeichnet. Dies ist der halbe Kegelwinkel des aus der Stirnfläche des Kernes der optischen Faser 7 austretenden Lichtstrahles. Dieser Winkel α/2 ist gleichzeitig jener Winkel unter dem das reflektierte Licht noch in die Faser 7 eintreten kann, um durch diese weitergeleitet zu werden, sozusagen von dieser akzeptiert wird.

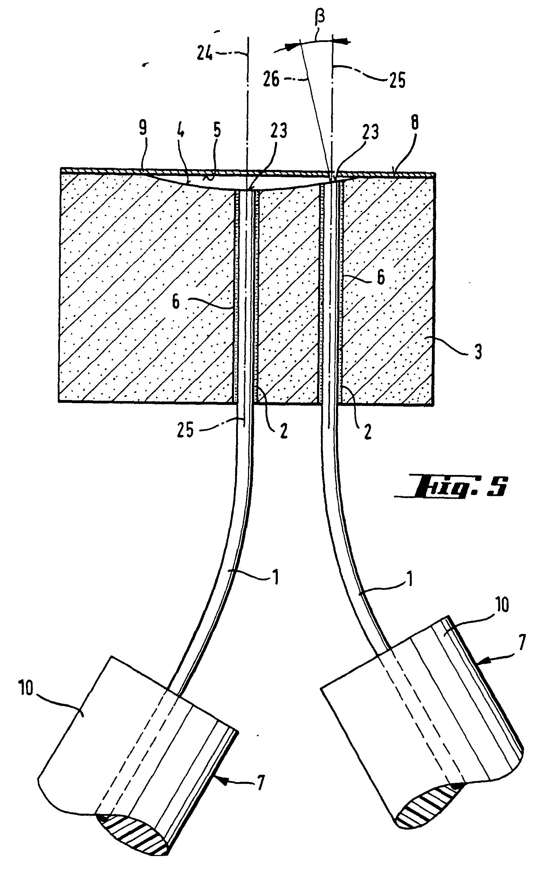

Die Ausführungsform gemäß Fig. 7 zeigt einen Sensor bei dem in einem Block 3 bzw. in dessen Bohrungen 6 drei optische Fasern 7, wie bereits erläutert, gehalten sind. Dabei sind zwei dieser Fasern an einer Seite der Rotationsachse des Blockes 3 und die dritte an der diesen gegenüberliegenden Seite angeordnet. Der Block 3 ist gemeinsam mit den drei optischen Fasern plan geschliffen und über ein nicht dargestelltes Federungssystem, z.B. eine elastomere Zwischenlage gegen einen starren Körper 27 schwingend gehalten. Dieser starre Körper weist an seiner der Stirnfläche des Blockes 3 gegenüberliegenden Seite die relektierende Fläche 5 auf. Mit diesem Sensor können in einfacher Weise durch Körperschall hervorgerufene Schwingungen erfaßt werden.

Durch die Anordnung der Fasern zu beiden Seiten ist es z.B. durch Differenz- oder Quotientenmessung der reflektierten Lichtmengen insbesonders dann möglich den Sensor zu kalibrieren, wenn die Zuleitung des Lichtes nur durch eine der optischen Fasern 7 erfolgt. In diesem Falle ist die Einkopplung des reflektierten Lichtes in die beiden das Licht nicht zuführenden optischen Fasern 7 von der Entfernung deren Stirnflächen zur reflektierenden Fläche 5 abhängig, sodaß das Verhältnis oder die Differenz des in jede dieser Fasern eingekoppelten Lichtes ein Maß für diese Entfernung darstellt, sodaß ein solcher Sensor als Näherungssensor verwendet werden kann. Verwendet man die das Licht zuleitende optische Faser 7 gleichzeitig auch zur Erfassung des reflektierten Lichtes, so kann gegebenenfalls auf die dritte optische Faser 7 verzichtet werden.

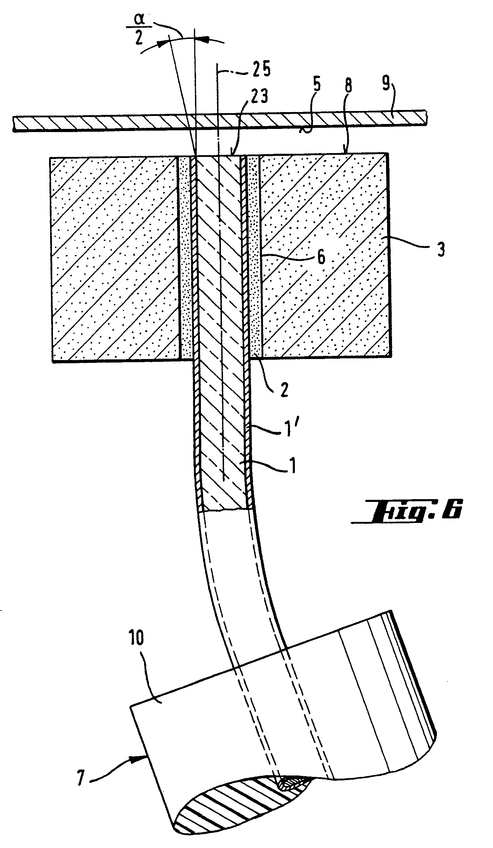

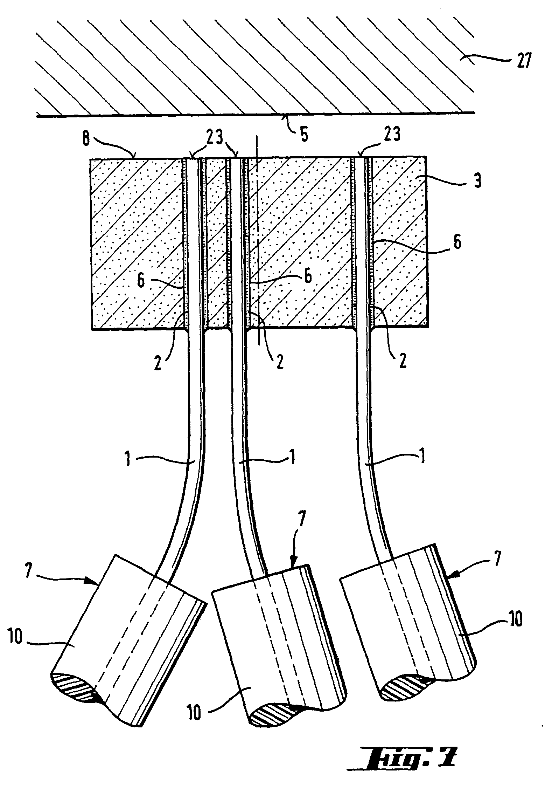

Die Fig. 8 zeigt einen Sensor der ähnlich jenem gemäß Fig. 2 aufgebaut ist, das heißt, daß der Block 3 mit einem Hohlschliff 4 versehen und von der Membrane 9, die die reflektierende Fläche 5 aufweist, überspannt ist. Dieses System ist über elastomere Zwischlenlagen 28 mit einem Gehäuse 29 verbunden, sodaß der Block samt der Membrane 9 geenüber dem Gehäuse 29 schwingen kann. Diese Anordnung ist besonders für die Verwendung in Mikrophonen geeignet, da sich dadurch ein hoher Klingschutz ergibt. Dies ist dadurch bedingt, daß z.B. beim Ablegen eines solchen Mikrophons auf eine harte Unterlage eine zu starke Anregung der Membrane 9 unterbleibt, da eben solche Stöße von den elastomeren Zwischenlagen 29 aufgenommen bzw. stark gedämpft werden. In ähnlicher Weise schützen diese elastomeren Zwischenlagen auch das eigentliche Aufnahmesystem 1, 3, 9 gegen eine überbelastung, z.B. bei einem zu starken Anblasen des Mikrophons, um dieses auf seine Funktion zu überprüfen. Auch dabei nehmen die elastischen Zwischenlagen ainen großen Teil der Kräfte auf.

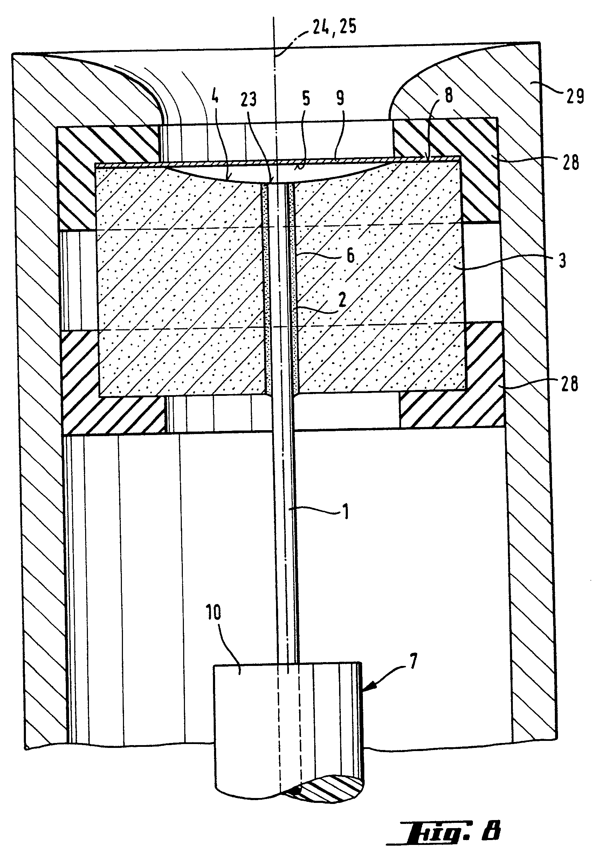

Die Fig. 9 zeigt einen Sensor bei dem zwei optische Fasern 7 bzw. deren Kerne gegen die Achse des Blockes 3 geneigte, parallel laufende Bohrungen 6' mittels der erhärteten Massen 2 gehalten sind. Dieser Block weist ebenfalls eine plan geschliffene Stirnseite auf, die der Membran 9 gegenüberliegt. Die Faserachsen 25 weisen daher gegenüber den Flächennormalen 26 einen Austrittswinkel ß auf. Aufgrund des Planschliffs der Stirnflächen des Kernes 1 der optischen Fasern 7 fällt die Tangentialebene im Durchstoßpunkt der Faserachsen 25 mit den Stirnflächen 23 der Kerne 1 mit der Ebene der Stirnflächen zusammen.

Durch diese Anordnung ergibt sich, wie bereits erläutert, eine Versteilerung der Kennlinie des Sensors im Bereich nahe der Ruhlage der Membrane 9, die die reflektierende Fläche 5 aufweist. Aufgrund der Anordnung der beiden Fasern in dem Block 3 ist es mit diesem Sensor ebenfalls möglich, diesen bei bekannter Lage der Membrane 9 gegenüber der Stirnfläche 8 des Blockes 3 zu justieren und auch als Näherungssensor zu verwenden.

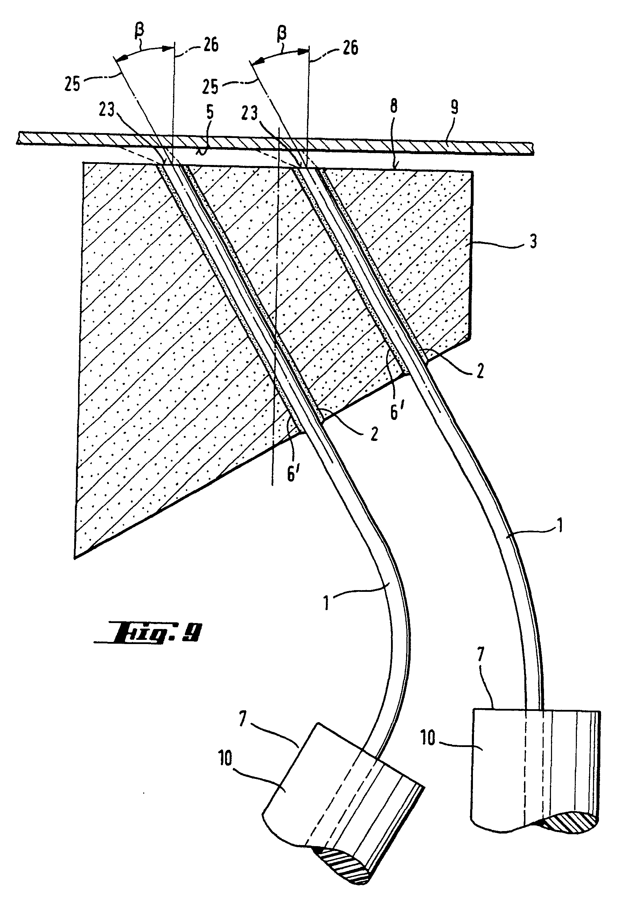

Die Fig. 10 zeigt eine Sensoranordnung für die räumliche Erfassung von Schwingungen ermöglicht. Der Aufbau der einzelnen Sensoren entspricht dabei im Prinzip dem in der Fig. 4 dargestellten. Dabei wirken stets ein die optische Faser 7 haltender Block 3 mit einem gleich schweren Block 17 zusammen, dessen eine der Stirnfläche der optischen Faser 7 gegenüberliegende Fläche reflektierend ausgebildet ist. Jedes Paar von Blöcken 3, 17 ist gegeneinander schwingend abgestützt, z.B. mittels nicht dargestellter elastomerer Zwischenlagen, die dem elastomeren Ring 18 gemäß der Fig. 4 entsprechen. Die Stirnflächen der in den Blöcken 3 gehaltenen optischen Fasern 7 liegen dabei in drei zueinander senkrechten Ebenen. Die Blockpaare 3, 17 sind miteinander ebenfalls über elastiche Zwischenlagen, die den elastomeren Ringen 19 gemäß Fig. 4 entsprechen, und mit einem nicht dargestellen Gehäuse verbunden.

Mit dieser Sensoranordnung können daher Schwingungen in der X, Y und Z-Achse, die senkrecht zu den Stirnflächen der optischen Fasern 7 verlaufen, erfaßt werden. Durch entsprechende Abstimmung der zwischen den Blöcken 3, 17 eines jeden einzelnen Blockpaares und zwischen den einzelnen Blockpaaren, sowie zwischen der Sensoranordnung und einem diese umgebenden, nicht dargestellten Gehäuse angeordneten Federsysteme kann die Empfindlichkeit in den erwähnten Achsen beeinfluß werden. Eine weitere Möglichkeit der Beeinflussung der Empfindlichkeit in den verschiedenen Richtungen besteht auch darin, daß die Massen der die optischen Fasern haltenden Blöcke variiert wird. Dies kann entweder durch Wahl von Materialien mit verschiedener spezifischer Masse für die Blöcke 3 oder durch unterschiedliche Dimensionierung dieser Blöcke erreicht werden.

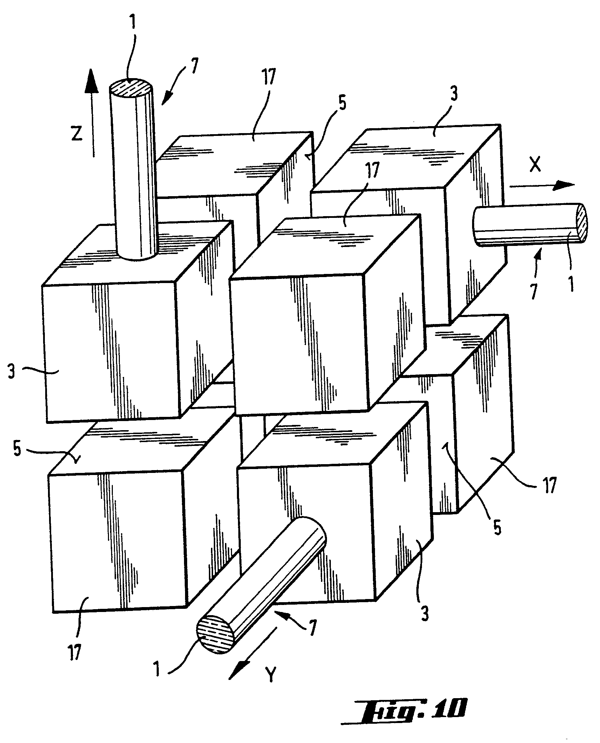

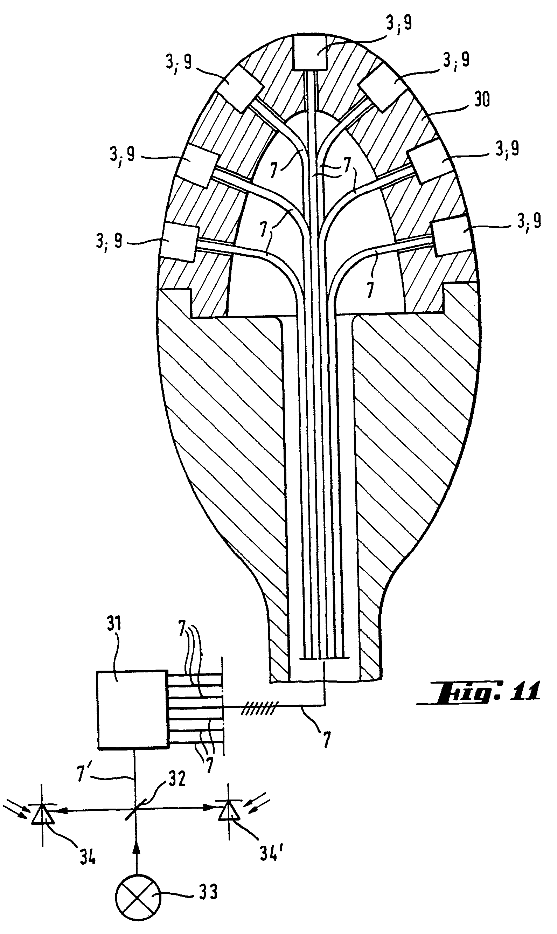

Die Fig. 11 zeigt eine Sensoranordnung die sich besonders für den Bau eines Mikrophons mit gegebenenfalls allseitig gleicher Empfindlichkeit eignet. Dabei können Sensoren wie sie z.B. in den Fig. 2 und 8 dargestellt sind, auf einem Träger 30 räumlich verteilt angeordnet sein, wobei dieser Träger selbstverständlich entsprechende Kanäle zur Durchführung der optischen Fasern 7 aufweisen muß. Diese optischen Fasern laufen zu einem Strahlteiler bzw. Multiplexer 31, an den eine weitere optische Faser 7' angeschlossen ist. In diese weitere optische Faser 7' wird über einen weiteren Strahlenteiler 32 das Licht einer Lichtquelle 33 eingekoppelt bzw. das reflektierte Licht ausgekoppelt und zu zwei Detektoren 34, 34', dis an eine nicht dargestellte übliche Auswerteschaltung angeschlossen sind, geleitet. Dabei dient einer der Detektoren zur ständigen Korrektur um Schwankungen in der Intensität der Lichtquelle erfassen und ausgleichen zu können.

Mit einer solchen Sensoranordnung ist es daher möglich ein Mikrophon mit einer im wesentlichen nach allen Richtungen gleichmäßigen Empfindlichkeit herzustellen. Dies ist aufgrund der geringen Abmessungen eines jeden einzelnen Sensors möglich, ohne daß das Mikrophon eine unhandliche Größe annehmen muß. Dabei kann auch für die gesamte Anordnung ein Klingschutz wie sie mit der Sensoranordnung gemäß Fig. 8 erreicht wird, vorgesehen werden. Dazu ist es lediglich erforderlich jeden einzelnen Sensor, samt der Membrane gegen einen gehäusefesten Teil federnd abzustützen.

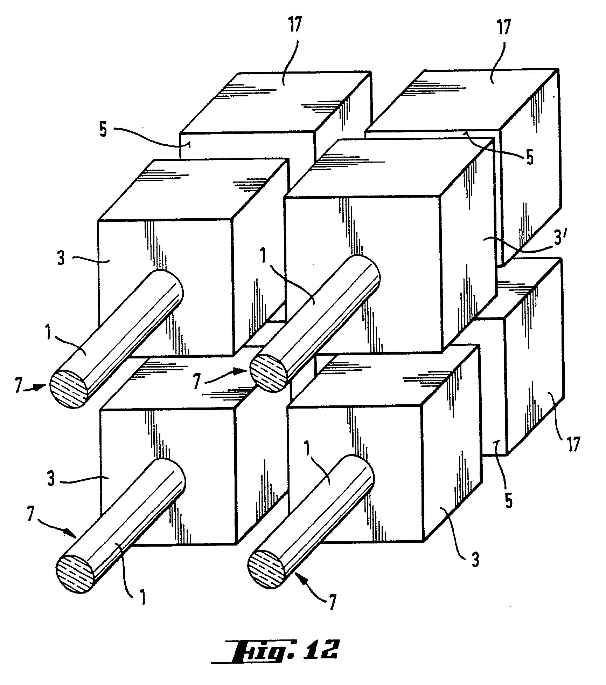

Fig. 12 zeigt eine der Fig. 10 im Prinzip ähnliche Sensoranordnung, allerdings liegen bei dieser die Stirnflächen der optischen Fasern 7 in zueinander parallelen Ebenen. Praktisch sind bei der Ausführungsform gemäß Fig. 12 vier Sensoren nebeneinander angeordnet, wobei diese Sensoren im Prinzip jenen gemäß Fig. 4 entsprechen. Dies bedeutet, daß die die optischen Fasern haltenden Blöcke 3 gegenüber den eine gleich große Masse aufweisenden Blöcken 17 federnd abgestützt sind, wobei die Blöcke 17 die reflektierenden Flächen 5 aufweisen. Durch entsprechende unterschiedliche Abstimmung der einzelnen, zwischen je einem Block 3 und den zugehörigen Block 17 wirkenden Federsystemen wird erreicht, daß jeder einzelne aus einem Block 3 und 17 bestehende Sensor entweder auf ein anderes Frequenzband besonders empfindlich ist, oder einen anderen Dynamikbereich aufweist. Damit ist es möglich die Schwingungen eines breiten Frequenzgemisches auf einfache Weise zu erfassen oder aber einen sehr großen Dynamikbereich zu erzielen. Die Abstützung der einzelnen Paare von Blöcken 3, 17 gegeneinander erfolgt ebenfalls über nicht dargestellte elastische Zwischenlagen, deren Federkraft gegenüber jener des zwischen den Blöcken 3, 17 eines jeden einzelnen Sensors wirkenden Federsystems entsprechend den jeweiligen Anforderungen abgestimmt werden kann, z.B. um einen großen Frequenz- oder einen großen Dynamikbereich zu erzielen.

Auch bei dieser Sensoranordnung ist es durch Festlegung unterschiedlicher Massen für die einzelnen Blöcke 3 bzw. 7 möglich die Charakteristik der Anordnung beeinflussen zu können. Beim dargestellten Ausführungsbeispiel ist dies durch größere Abmessungen eines der Blöcke 3' angedeutet.

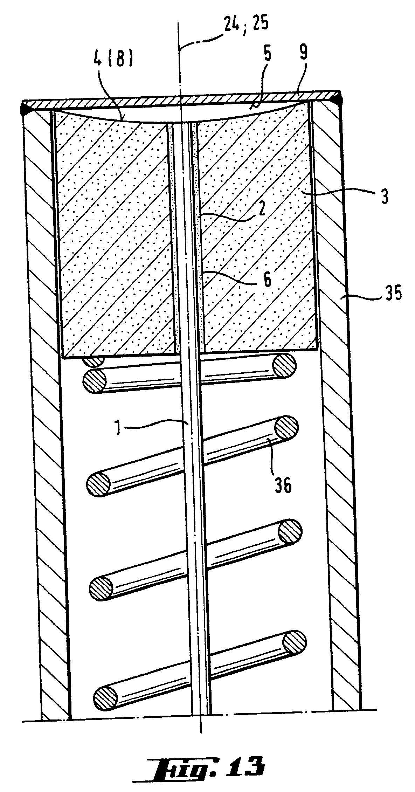

Die Fig. 13 zeigt eine Ausführungsform eines erfindungsgemäßen Sensors der sich besonders für die serienmäßige Herstellung solcher Sensoren eignet. Bei diesem ist der Kern 1 der optischen Faser wie üblich in einer Bohrung 6 eines Blockes 3 mittels einer erhärteten Masse 2 gehalten. Der wesentliche Unterschied zwischen dem Sensor gemäß der Fig. 2 und jener gemäß Fig. 3 besteht darin, daß die gesamte Stirnfläche 8 des Blockes 3, und damit auch die Stirnfläche des Kernes 1 der optischen Faser hohl geschliffen ist. Dies bringt den Vorteil mit sich, daß die Blöcke 3 einer gesamten Serie von Sensoren mit einem bzw. gleichen Werkzeugen geschliffen werden können, wobei das Schleifen, der Stirnflächen 8 so lange fortgesetzt wird, bis sich der Hohlschliff über die gesamte Stirnfläche erstreckt und sich ein scharfer Rand des Blockes gebildet hat. Dabei ist die Tiefe des Hohlschliffs allein durch das Werkzeug und nicht durch die Einstellung des Werkzeugs zum Werkstück, also dem Block 3 bestimmt. Dadurch ergibt sich eine nur sehr geringe Streuung der entsprechenden Maße innerhalb einer Serie.

Bei dem Sensor gemäß Fig. 13 ist der Block in einem Gehäuse 35 gehalten, das durch die Membrane 9, die die reflektierende Fläche 5 aufweist, abgeschlossen ist. Der Block 3 selbst ist mittels einer Feder 36 gegen die Membrane 9 gepreßt. Die Funktion dieses Sensors ist gleich jener des an Hand der Fig. 2 beschriebenen.

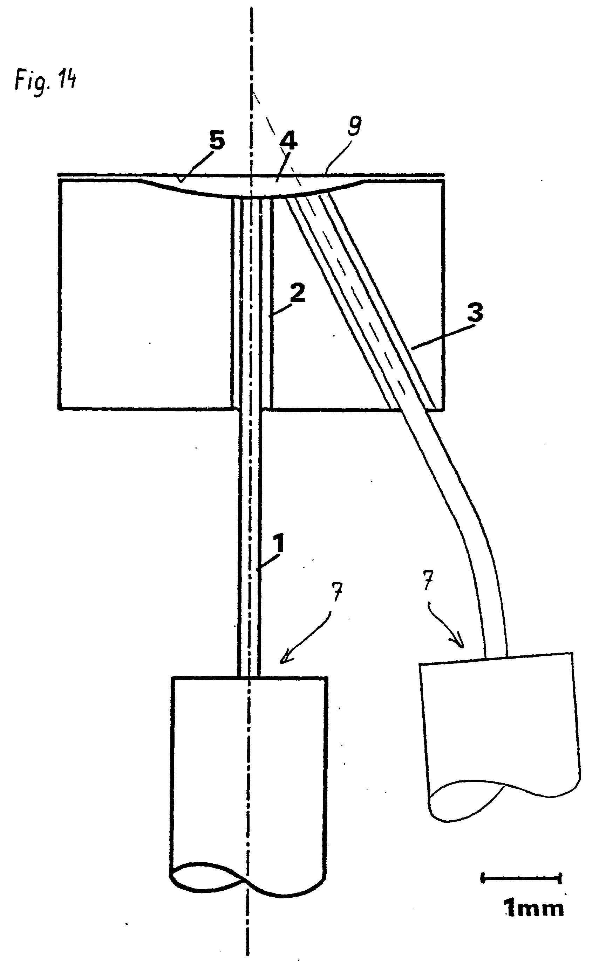

Die Ausführungsform gemäß Fig. 14 unterscheidet sich von jener gemäß Fig. 5 dadurch, daß die beiden optischen Fasern 7 nicht parallel zueinander, sondern zueinander geneigt in dem Block 3 geführt sind. Dies führt dazu, daß das aus der geneigt zur Achse des Blockes 3 verlaufenden Faser 7 austretende Licht in Richtung zur Achse des Blockes hin gebrochen wird und diese Faser 7 daher nur aus diesem Bereich reflektiertes Licht aufnehmen und weiterleiten kann. Bei in ihrer Ruhelage befindlicher Membrane 9 kann die geneigt zur Achse des Blockes 3 verlaufende Faser 7 das aus ihr austretende und an der reflektierenden Fläche 5 reflektierte Licht nicht mehr aufnehmen bzw. nicht mehr weiterleiten. Erst wenn die Membrane 9 eine bestimmte, durch entsprechende Dimensionierung festlegbare Auslenkung in Richtung zum Block 3 hin aufweist, kann Licht in die geniegt zur Achse des Blockes 3 verlaufende Faser 7 eingekoppelt werden. Damit ergibt sich im Betrieb eines solchen Sensors in Bezug auf die geneigt verlaufende Faser 7 ein ausgeprägtes Schwellwertverhalten, da eben bei zu geringer Auslenkung der Membrane 9 kein reflektiertes Licht aus dieser Faser 7 ausgekoppelt werden kann. Weiters kann damit aber auch die Schwingungsfrequenz der Membrane 9 sehr einfach erfaßt werden, da nur bei jeder zweiten Halbwelle der Schwingungen der Membrane reflektiertes Licht in die geneigt zur Achse des Blockes verlaufende Faser 7 eingekoppelt werden kann.

Dieser Effekt kann auch zur Kalibrierung der in der Achse des Blockes 3 verlaufenden Faser 7 verwendet werden. So kann damit die Menge des bei einer bestimmten Membranauslenkung in die zentrale Faser 7 eingekoppelten reflektierten Lichtes bestimmt werden, z.B. bei jener Auslenkung der Membrane bei der das reflektierte Licht gerade in die geneigt verlaufende Faser 7 eingekoppelt werden kann.

Dies ist zwar grundsaätzlich auch bei der Ausführungsform gemäß Fig. 5 möglich, doch ist dieser Effekt bei der Ausführung gemäß Fig. 5 nur schwach ausgeprägt, wenn nicht ein Hohlschliff 4 mit sehr kleinem Radius vorgesehen ist, der eine relativ starke Neigung der Stirnfläche der außenmittig zur Achse des Blockes verlaufenden Faser 7 bedingt.

Grundsätzlich ist zu bemerken, daß alle in einem Block 3 gehaltenen optischen Fasern 7 beim Betrieb des Sensors sowohl für die Zufuhr des Lichtes, wie auch für die Weiterleitung des an der reflektierenden Fläche 5 reflektierten Lichtes eingesetzt werden. Davon sind nur als Näherungssensoren arbeitende Sensoren nach der Erfindung ausgenommen, bei denen zumindest eine optisch Faser 7 lediglich zur Weiterleitung des von einer anderen Faser 7 desselben Blockes zugeführten und an der reflektierenden Fläche 5 reflektierten Lichtes eingesetzt wird. Dadurch wird es möglich zwischen den Stirnflächen der optischen Faser^U7 und der reflektierenden Fläche 5 reflativ große Abstände zulassen zu können, die ohne weiteres 10 cm und mehr betragen können.

Bei den in den Figuren dargestellten Ausführungsformen erfindungsgemäßer Sensoren ist zu bemerken, daß bei jeder Ausführungsform die reflektierende Fläche 5 sowohl verspiegelt als auch diffus streuend, bzw. matt glänzend ausgeführt sein kann, wobei die Oberflächenrauheit zweckmäßigerweise kleiner als 1 µm gehalten wird. Der Abstand der Stirnfläche 23 einer optischen Faser 7 von der zugehörigen reflektierenden Fläche beträgt bei den nur eine optische Faser 7 pro Block 3 aufweisenden Ausführungsformen zweckmäßigerweise weniger als 200 µm vorzugsweise weniger als 100 µm, wenn optische Fasern mit den heute meist verwendeten Kerndurchmessern im Bereich von 50 bis 200 µm verwendet werden. Bei anderen Kerndurchmessern der optischen Fasern 7 wird bei diesen Sensoren zweckmäßigerweise der Abstand der reflektierenden Fläche 5 von der Stirnfläche 23 der optischen Faser kleiner als der dreifache Sinus des halben Akzeptanzwinkels α/2 der Faser 7 gewählt. Weiters ergeben sich auch bei einer Wahl des Abstandes der reflektierenden Fläche 5 von der Stirnfläche der optischen Faser 7 gleich dem Durchmesser des Kernes 1 der Faser sehr günstige Verhältnisse.

Für die Erfassung von magnetischen Schwingungen oder Feldern werden zweckmäßigerweise Ausführungen von erfindungsgemäßen Sensoren verwendet, bei denen der die optische Faser 7 haltende Block 3 gegen einen anderen Block 17 oder einen starren Körper 27 schwingen kann, wobei in diesen Fällen auch der andere Block 17 oder der starre Körper 27 aus einem magnetisierbaren, vorzugsweise einem ferromagnetischen Material hergestellt sind. In diesem Fall wird die Schwingung des die Faser haltenden Blockes 3 durch die Induktion angeregt.

**Patentansprüche**

Verfahren zur Herstellung eines amplituden- oder intensitätsmodulierten faseroptischen Reflexionssensors, insbesondere eines Schwingungs- oder Klopfsensors, mit mindestens einer das Licht zu einer reflektierenden Oberfläche (5) oder Membrane (9) leitenden optischen Faser (7), die das Licht nach erfolgter Reflexion wieder einfängt und einer weiteren Verarbeitung zuleitet, bei dem die optische Faser (7) an ihrer Stirnseite geschliffen und in ihrem einen Endbereich in einem Block (3) fixiert und die reflektierende Gegenfläche (5, 9) in einem bestimmten Abstand von der dieser zugekehrten Stirnseite der optischen Faser (7) angebracht wird, dadurch gekennzeichnet, daß die optische Faser in eine Durchgangsbohrung (6) des Blockes (3) eingeführt und in dieser durch Eingießen, Einkleben oder Einkitten fixiert und nach dem Erhärten dieser Massen gemeinsam mit der Stirnseite des Blockes geschliffen wird.

2. Verfahren nach Anspruch 1, dadurch gekennzeichnet, daß die Stirnseite des Blockes (3) zumindest im Bereich der Faser (7) konkav ausgeschliffen wird.

3. Verfahren nach einem der Ansprüche 1 oder 2, dadurch gekennzeichnet, daß die optische Faser (7) in deren in den Block (3) einzuführendem Ende vor dem Einführen in den Block von ihrer Außenhülle bis auf die den Kern umgebende Reflexionsschichte befreit wird.

4. Faseroptischer Sensor, hergestellt nach einem der Verfahren gemäß Anspruch 1 bis 3, insbesondere Schwingungs- oder Klopfsensor, mit mindestens einer das Licht zu einer reflektierenden Fläche (5) oder einer Membrane (9) leitenden Faser (7), die das Licht nach erfolgter Reflexion wieder einfängt und einer weiteren Verarbeitung zuleitet, wobei die optische Faser (7) an ihrer Stirnseite geschliffen und in ihrem einen Endbereich in einer Durchgangsbohrung (6) eines Blocks (3) über eine erhärtete Masse (2) fixiert und die reflektierende Fläche (5) in einem bestimmten Abstand von der dieser zugekehrten Stirnfläche (23) der optischen Faser (7) angebracht ist, wobei der Abstand der Stirnfläche (23) von der dieser gegenüberliegenden reflektierenden Fläche (5) in an sich bekannter Weise eine mit dem Durchmesser des Kernes (1) der optischen Faser (7) vergleichbare Größe aufweist und daß dieser Abstand nicht wesentlich größer als die maximale Amplitude der gegenseiten Bewegung der reflektierenden Fläche (5) gegenüber der Stirnfläche (23) der optischen Faser (7) ist.

5. Reflexionssensor nach Anspruch 4, dadurch gekennzeichnet, daß der Abstand der Stirnfläche (23) der optischen Faser (7) von der reflektierenden Fläche (5) kleiner als 200 μm, vorzugsweise kleiner als 100 μm ist.

6. Reflexionssensor nach Anspruch 4 oder 5, dadurch gekennzeichnet, daß die Bohrung (6) des Blockes (3) an seiner von der reflektierenden Fläche (5) abgekehrten Seite einen größeren Durchmesser aufweist und in diesem, den größeren Durchmesser aufweisenden Bereich der Bohrung (6) die optische Faser (7) mitsamt ihrer Außenhülle (10) eingegossen, eingekittet oder eingeklebt ist. (Fig. 3)

7. Reflexionssensor nach einem der Ansprüche 4 bis 6, dadurch gekennzeichnet, daß die reflektierende Fläche (5) an einer Membrane (9) angeordnet ist.

8. Reflexionssensor nach Anspruch 7, dadurch gekennzeichnet, daß die Achsen der im Block fixierten optischen Faser (7) und der Membrane (9) parallel zueinander, vorzugsweise koaxial zueinander ausgerichtet sind. (Fig. 2)

9. Reflexionssensor nach Anspruch 7 oder 8, dadurch gekennzeichnet, daß die im Block (3) gehaltene optische Faser (7) gegenüber der Achse (24) des konkaven Anschliffs (4) versetzt angeordnet ist. (Fig. 5)

10. Reflexionssensor nach einem der Ansprüche 4 bis 9, dadurch gekennzeichnet, daß die Membrane (9) auf den Rand der Stirnfläche des Blockes (3) aufgeklebt, aufgekittet oder aufgepreßt ist, wobei in der Stirnfläche des Blockes (3) im Bereich der optischen Faser (7) ein konkaver Anschliff (4) vorhanden ist. (Fig. 2, 5)

11. Reflexionssensor nach einem der Ansprüche 4 bis 10, dadurch gekennzeichnet, daß die reflektierende Fläche matt glänzend ist und einen großen difusen oder inkohärenten Reflexionskoeffizienten für die Wellenlänge des durch die optische Faser (7) geleiteten Lichtes aufweist.

12. Reflexionssensor nach Anspruch 11, dadurch gekennzeichnet, daß die Oberflächenrauhigkeit der diffus reflektierenden Fläche (5) kleiner als 1 um ist.

13. Reflexionssensor nach einem der Ansprüche 4 bis 12, dadurch gekennzeichnet, daß der Abstand der Stirnseite (23) der optischen Faser (7) von der reflektierenden Fläche (5) gleich dem Durchmesser des Kernes (1) der optischen Faser (7) ist. (Fig. 6)

14. Reflexionssensor nach einem der Ansprüche 4 bis 13, dadurch gekennzeichnet, daß der mit dem dreifachen Sinus des halben Akzeptanzwinkels (α/2) der optischen Faser (7) multiplizierte Abstand der Stirnseite (23) der optischen Faser (7) von der reflektierenden Fläche (5) kleiner als der Durchmesser des Kernes (1) der Faser (7) ist. (Fig. 6)

15. Reflexionssensor nach einem der Ansprüche 4 bis 14, dadurch gekennzeichnet, daß die Eigenfrequenz der Membrane (9) mit einer bevorzugt nachzuweisenden Frequenz übereinstimmt.

16. Reflexionssensor nach einem der Ansprüche 4 bis 14, dadurch gekennzeichnet, daß die Eigenfrequenz der Membrane (9) weit außerhalb des Frequenzbandes der zu messenden Schwingungen liegt.

17. Reflexionssensor nach einem der Ansprüche 4 bis 16, dadurch gekennzeichnet, daß die Membrane eine starke Dämpfung aufweist.

18. Reflexionssensor nach einem der Ansprüche 4 bis 17, dadurch gekennzeichnet, daß die reflektierende Fläche (5) an einem starren Körper (27) angeordnet ist und der die optische Faser (7) haltende Block (3) gegenüber diesem schwingend gehalten ist. (Fig. 7)

19. Reflexionssensor nach einem der Ansprüche 4 bis 17, dadurch gekennzeichnet, daß der die optische Faser (7) haltende Block (3) gemeinsam mit der diesen überspannenden elastischen Membrane (9) elastisch federnd in einer Halterung (29) abgestützt sind, wobei die Eigenfrequenz dieses Systems vorzugsweise weit außerhalb des bei der Messung zu erwartenden Frequenzbandes liegt. (Fig. 8)

20. Reflexionssensor nach einem der Ansprüche 4 bis 17, dadurch gekennzeichnet, daß die Eigenfrequenz des gegen den die reflektierende Fläche (5) aufweisenden starren Körper (27) schwingend gehaltenen, die optische Faser (7) haltenden Blockes (3) mit einer bevorzugt zu messenden Frequenz übereinstimmt. (Fig. 7)

21. Reflexionssensor nach einem der Ansprüche 4 bis 20, dadurch gekennzeichnet, daß der Austrittswinkel (β) der Faserachse (25), der durch den Winkel, den die Flächennormale der Tangentialebene im Durchstoßpunkt der Faserachse (25) der optischen Faser (7) durch deren Stirnfläche mit dieser Faserachse (25) einschließt, bestimmt ist, 10 bis 30° beträgt. (Fig. 5, 9)

22. Reflexionssensor nach einem der Ansprüche 4 bis 21, dadurch gekennzeichnet, daß in dem Block (3) mindestens zwei optische Fasern (7) gehalten sind, deren Achsen zueinander parallel verlaufen und deren Austrittswinkeln (β) ihrer Faserachsen (25) 10 bis 30° beträgt, wobei die beiden Stirnflächen (23) der optischen Fasern (7) an zwei gegenüberliegenden Seiten der Achse der Membrane (9) angeordnet sind. (Fig. 9)

23. Reflexionssensor nach einem der Ansprüche 4, dadurch gekennzeichnet, daß der die optische Faser(n) (7) haltende Block (3) gegen einen gleich schweren die reflektierende Fläche (5) aufweisenden Block (17) federnd gelagert ist, wobei die Eigenfrequenz dieses Systems (3, 17) gleich der nachzuweisenden Frequenz oder des Doppelten der nachzuweisenden Frequenzen ist und die einander gegenüberliegenden Flächen der beiden Blöcke (3, 17) parallel zueinander verlaufen. (Fig. 4)

24. Reflexionssensor nach Ansprüche 23, dadurch gekennzeichnet, daß der Abstand zwischen den beiden Blöcken (3, 17) weniger als 100 μm beträgt.

25. Reflexionssensor nach Ansprüche 23 oder 24, dadurch gekennzeichnet, daß die beiden Blöcke (3, 17) federnd gegen eine Halterung (20) abgesetzt sind, wobei die zwischen den beiden Blöcken (3, 17) wirkende Federkraft wesentlich größer als die zwischen den Blöcken (3, 17) und der Halterung (20) wirkende Federkraft ist. (Fig. 4)

26. Reflexionssensor nach Ansprüche 23 oder 24, dadurch gekennzeichnet, daß die beiden Blöcke (3, 17) federnd gegen eine Halterung (20) abgestützt sind, wobei die zwischen den beiden Blöcken (3, 17) wirkende Federkraft wesentlich kleiner als die zwischen den Blöcken (3, 17) und der Halterung (20) wirkende Federkraft ist. (Fig. 4)

27. Reflexionssensor nach einem der Ansprüche 23 bis 25, dadurch gekennzeichnet, daß beiden Blöcke (3, 17) aus einem magnetisierbaren Material hergestellt sind. (Fig. 4)

28. Reflexionssensor nach einem der Ansprüche 23 bis 27, dadurch gekennzeichnet, daß mehrere Blockpaare (3, 17) zu einer Einheit zusammengebaut sind, wobei die optischen Fasern (7) im wesentlichen in drei zueeinander senkrechten Richtungen in den entsprechenden Blöcken (3, 17) geführt sind. (Fig. 10)

29. Reflexionssensor nach einem der Ansprüche 4 bis 26 und 28, dadurch gekennzeichnet, daß die die optischen Fasern (7) haltenden Blöcke (3) aus Keramik oder Glas, vorzugsweise Quarzglas besteht, wobei das Material des Blockes Licht stark absorbiert.

30. Reflexionssensor nach einem der Ansprüche 4 bis 29, dadurch gekennzeichnet, daß die optische Faser(n) (7) und der sie haltende Block (3) ähnliche Temperaturkoeffizienten aufweisen.

31. Reflexionssensor nach einem der Ansprüche 4 bis 30, dadurch gekennzeichnet, daß mehrere, die optischen Fasern (7) haltende Blöcke (3) zu einer Einheit zusammengefaßt sind und die optischen Fasern (7) vorzugsweise über einen Strahlenteiler von einer Lichtquelle (33) beaufschlabbar ist. (Fig. 12)

32. Reflexionssensor nach Anspruch 31, dadurch gekennzeichnet, daß mehrere Blöcke (3) bzw. die in diesen gehaltenen optischen Fasern (7) nach verschiedenen Richtungen verlaufen und über einen Strahlteiler (31) von einer Lichtquelle (33) beaufschlagbar sind. (Fig. 11)

33. Reflexionssensor nach Anspruch 32, dadurch gekennzeichnet, daß die die optischen Fasern (7) haltenden Blöcke (3) unterschiedlich große Massen aufweisen. (Fig. 13)

34. Reflexionssensor nach einem der Ansprüche 4 bis 17, 19, 21, 22 und 28 bis 33, dadurch gekennzeichnet, daß der die optische Faser (7) haltende Block (3) einen sich über seine gesamte, der reflektierenden Fläche (5) gegenüberliegenden Stirnseite (8) erstreckenden Hohlschliff (4) aufweist. (Fig. 13)

35. Reflexionssensor nach einem der Ansprüche 4 bis 21, dadurch gekennzeichnet, daß in den Block (3) mindestens zwei optische Fasern (7) gehalten sind, deren Achsen zueinander geneigt verlaufen, wobei die Austrittswinkel (β) der Faserachsen (25) unterschiedlich sind. (Fig. 14)

## Revendications

1. Procédé pour fabriquer un capteur à réflexion, à fibre optique modulé en amplitude ou en intensité, en particulier un capteur de vibration ou de cognement, possédant au moins une fibre optique (7) conduisant la lumière à une face réfléchissante (5) ou une membrane (9) et qui, après réflexion, recueille de nouveau la lumière et la dirige vers un traitement consécutif, procédé dans lequel la fibre optique (7) est meulée à son extrémité et fixée par l'une de ses portions extrêmes dans un bloc (3) et la surface antagoniste réfléchissante (5, 9) est disposée à un écartement déterminé de cette extrémité de la fibre optique (7), vers laquelle elle est tournée, caractérisé en ce que l'on introduit la fibre optique dans un perçage traversant (6) du bloc (3), on la fixe dans ce perçage par coulée, collage ou cimentage et, après le durcissement de la matière de fixation, on la meule conjointement avec la face frontale du bloc.

2. Procédé selon la revendication 1, caractérisé en ce que l'on meule une forme concave dans la face frontale du bloc (3), tout au moins dans la région de la fibre (7).

3. Procédé selon la revendication 1 ou 2, caractérisé en ce que, avant l'introduction de la fibre optique (7) dans le bloc, on la débarrase, sur sa portion extrême à introduire dans le bloc (3), de son revêtement, jusqu'à la gaine (couche réfléchissante) entourant le coeur.

4. Capteur à fibre optique, fabriqué d'après l'un des procédés selon les revendications 1 à 3, en particulier capteur de vibration ou de cognement, possédant au moins une fibre (7) conduisant la lumière jusqu'à une face réfléchissante (5) ou une membrane (9) et qui, après réflexion, recueille de nouveau la lumière et la conduit vers un traitement consécutif, capteur dans lequel la fibre optique (7) est meulée à son extrémité et est fixée par l'une de ses portions extrêmes dans un perçage traversant (6) d'un bloc (3) à l'aide d'une matière durcie (2) et la face réfléchissante (5) est disposée à un écartement déterminé de la face d'extrémité ou extrémité (23) de la fibre optique (7), vers laquelle elle est dirigée, l'écartement de l'extrémité (23) de la fibre par rapport à la face réfléchissante (5), située en regard d'elle, présentant de façon connue une grandeur comparable au diamètre du coeur (1) de la fibre optique (7) et cet écartement n'étant pas notablement plus grand que l'amplitude maximale du mouvement de la face réfléchissante (5) par rapport à l'extrémité (23) de la fibre optique (7).

5. Capteur à réflexion selon la revendication 4, caractérisé en ce que l'écartement de l'extrémité (23) de la fibre optique (7) par rapport à la face réfléchissante (5) est inférieur à 200 µm, de préférence inférieur à 100 µm.

6. Capteur à réflexion selon la revendication 4 ou 5, caractérisé en ce que le perçage (6) du bloc (3) présente un plus grand diamètre dans sa partie éloignée de la face réfléchissante (5) et que la fibre optique (7), y compris son revêtement (10), est fixée par coulée, cimentage ou collage dans cette partie de plus grand diamètre du perçage (6). (Fig. 3)

7. Capteur à réflexion selon une des revendications 4 à 6, caractérisé en ce que la face réfléchissante (5) est disposée sur une membrane (9).

8. Capteur à réflexion selon la revendication 7, caractérisé en ce que l'axe de la fibre optique (7) fixée dans le bloc et l'axe de la membrane (9) sont parallèles, de préférence coaxiaux. (Fig. 2).

9. Capteur à réflexion selon la revendication 7 ou 8, caractérisé en ce que la fibre optique (7) maintenue dans le bloc (3) est décalée par rapport à l'axe (24) du meulage concave. (Fig. 5)

10. Capteur à réflexion selon une des revendications 4 à 9, caractérisé en ce que la membrane (9) est fixée sur le bord de la face frontale du bloc (3) par collage, cimentage ou pressage et que la face frontale du bloc (3) présente un meulage concave (4) dans la région de la fibre optique (7). (Fig. 2, 5)

11. Capteur à réflexion selon une des revendications 4 à 10, caractérisé en ce que la face réfléchissante a un éclat mat et présente un grand coefficient de réflexion diffuse ou incohérente pour la longueur d'onde de la lumière conduite à travers la fibre optique (7).

12. Capteur à reflexion selon la revendication 11, caractérisé en ce que la rugosité superficielle de la face (5) à réflexion diffuse est inférieure à 1 µm.

13. Capteur à réflexion selon une des revendications 4 à 12, caractérisé en ce que l'écartement de l'extrémité (23) de la fibre optique (7) par rapport à la face réflechissante (5) est égal au diamètre du coeur (1) de la fibre optique (7). (Fig. 6)

14. Capteur à réflexion selon une des revendications 4 à 13, caractérisé en ce que l'écartement de l'extrémité (23) de la fibre optique (7) par rapport à la face réfléchissante (5), multiplié par le triple sinus du demi-angle d'acceptance ($\alpha/2$) de la fibre optique (7), est plus petit que le diamètre du coeur (1) de la fibre (7). (Fig. 6)

15. Capteur à réflexion selon une des revendications 4 à 14, caractérisé en ce que la fréquence propre de la membrane (9) correspond à une fréquence à détecter de préférence.

16. Capteur à réflexion selon une des revendications 4 à 14, caractérisé en ce que la fréquence propre de la membrane (9) est située loin en dehors de la bande de fréquences des vibrations à mesurer.

17. Capteur à réflexion selon une des revendicatiomns 4 à 16, caractérisé en ce que la membrane présente un important amortissement.

18. Capteur à réflexion selon une des revendications 4 à 17, caractérisé en ce que la face réfléchissante (5) est disposée sur une pièce rigide (27) et que le bloc (3), maintenant la fibre optique (7), est supporté oscillant par rapport à cette pièce. (Fig. 7)

19. Capteur à réflexion selon une des revendications 4 à 17, caractérisé en ce que le bloc (3), maintenant la fibre optique (7), est appuyé élastiquement dans un support (29), ensemble avec la membrane élastique (9) tendue sur ce bloc, la fréquence propre de ce système étant située de préférence loin en dehors de la bande de fréquences prévue lors de la mesure. (Fig. 8)

20. Capteur à réflexion selon une des revendications 4 à 17, caractérisé en ce que la fréquence propre du bloc (3), maintenant la fibre optique (7) et supporté oscillant par rapport à la pièce rigide (27) présentant la face réflechissante (5), correspond à une fréquence à mesurer de préférence. (Fig. 7)

21. Capteur à réflexion selon une des revendications 4 à 20, caractérisé en ce que l'angle de sortie ($\beta$) de l'axe (25) de la fibre, déterminé par l'angle renfermé par la normale au plan tangent au point de percée de l'axe (25) de la fibre optique (7) par sa face d'extrémité et cet axe (25), est de 10 à 30°. (Fig. 5, 9)

22. Capteur à réflexion selon une des revendications 4 à 21, caractérisé en ce qu'au moins deux fibres optiques (7) sont maintenues dans le bloc (3), fibres dont les axes sont parallèles et dont les angles de sortie ($\beta$) de leurs axes (25) sont de 10 à 30°, les deux extrémités (23) des fibres optiques (7) étant disposées sur deux côtés opposés de l'axe de la membrane (9). (Fig. 9)

23. Capteur à réflexion selon une des revendications 4 à 22, caractérisé en ce que le bloc (3) maintenant la ou les fibres optiques (7) est monté élastiquement contre un bloc (17) ayant le même poids et présentant la face réflechissante (5), la fréquence propre du système (3, 17) ainsi formé étant égale à la fréquence à détecteur ou au double des fréquences à détecter et les faces dirigées l'une vers l'autre des deux blocs (3, 17) étant parallèles. (Fig. 4)

24. Capteur à réflexion selon la figure 23, caractérisé en ce que la distance entre les deux blocs (3, 17) est inférieure à 100 µm.

25. Capteur à réflexion selon la revendication 23 ou 24, caractérisé en ce que les deux blocs (3, 17) sont appuyés élastiquement sur un support (20) et la force élastique agissant entre les deux blocs (3, 17) est nettement plus grande que la force élaastique agissant entre les blocs (3, 17) et le support (20). (Fig. 4)

26. Capteur à réflexion selon la revendication 23 ou 24, caractérisé en ce que les deux blocs (3, 17) sont appuyés élastiquement sur un support (20) et la force élastique agissant entre les deux blocs (3, 17) est nettement plus petite que la force élastique agissant entre les blocs (3, 17) et le support (20). (Fig. 4)

27. Capteur à réflexion selon une des revendications 23 à 25, caractérisé en ce que les deux blocs (3, 17) sont faits d'un matériau magnétisable. (Fig. 4)

28. Capteur à réflexion selon une des revendications 23 à 27, caractérisé en ce que plusieurs paires de blocs (3, 17) sont réunies en un ensemble unitaire, les fibres optiques (7) étant guidées essentiellement suivant trois directions orthogonales dans les blocs (3, 17) concernés. (Fig. 10)

29. Capteur à réflexion selon une des revendications 4 à 26 et 28, caractérisé en ce que les blocs (3) maintenant les fibres optiques (7) sont en céramique ou en verre de préférence en verre de quartz, et le matériau constitutif des blocs produit une forte absorption de la lumière.

30. Capteur à réflexion selon une des revendications 4 à 29, caractérisé en ce que la ou les fibres optiques (7) et le bloc (3) maintenant la ou les fibres présentent des coefficients de température analogues.

31. Capteur à réflexion selon une des revendications 4 à 30, caractérisé en ce que plusieurs blocs (3) maintenant les fibres optiques (7) sont réunis en un ensemble unitaire et les fibres optiques (7) peuvent être alimentées par une source lumineuse (33), de préférence à travers un séparateur de faisceau. (Fig. 12)

32. Capteur à réflexion selon la revendication 31, caractérisé en ce que plusieurs blocs (3) ou les fibres optiques (7) maintenues dans ceux-ci s'étendent suivant différentes directions et peuvent être alimentés par une source lumineuse (33) à travers un séparateur de faisceau (31). (Fig. 11)

33. Capteur à réflexion selon la revendication 32, caractérisé en ce que les blocs (3) maintenant les fibres optiques (7) ont des masses différentes. (Fig. 13)

34. Capteur à réflexion selon une des revendications 4 à 17, 19, 21, 22 et 28 à 33, caractérisé en ce que le bloc (3) maintenant la fibre optique (7) présente un meulage en creux (4) qui s'étend sur toute sa face frontale (8), située en regard de la face réflechissante (5). (Fig. 13)

35. Capteur à réflexion selon une des revendications 4 à 21, caractérisé en ce que le bloc (3) maintient au moins deux fibres optiques (7) dont les axes (25) sont inclinés l'un par rapport à l'autre et possèdent des angles de sortie (β) différents. (Fig. 14)

**Claims**

1. A method of producing an amplitude- or intensity-modulated fiber-optical reflection sensor like a vibration sensor or knocking sensor comprising an optical fiber (7) and a light-reflecting surface (5), or diaphragm (9), the optical fiber being arranged to transmit light to the light-reflecting surface, to receive the reflected light from the surface and to conduct the light for further processing, and the optical fiber (7) being ground at its endface and having an end with an end face fixed in a block (3) and spaced a predetermined distance from the light-reflecting surface, characterized by introducing the optical fiber in a through bore (6) of said block (3) and fixing said fiber by pouring, glueing or puttying a hardenable adhesive mass into the through bore around the optical fiber end, and after hardening of said mass, together grinding the end faces of the optical fiber end and of the block.

2. The method of claim 1, characterized in that the end face of the block (3) is concavely ground at least in the region of the fiber (7).

3. The method of claim 1 or 2, characterized in that before introducing the optical fiber (7) into said block (3) the outer coating is removed from said fiber end to be introduced until the reflecting layer surrounding the core of said fiber.

4. A fiber-optical sensor produced in accordance with the methods of claims 1—3, especially a vibration sensor or knocking sensor comprising an optical fiber (7), which is arranged to transmit light to a light-reflecting surface (5) or a diaphragm (9) to receive the reflected light from the surface and to conduct the light for further processing, and the optical fiber (7) being ground in its end face and fixed in one of its end regions in the through-bore (6) of the block (3) by means of an adhesive mass (2), said reflecting surface (5) being mounted with a fixed distance from the opposing end surface (23) of the optical fiber, said distance having a magnitude in the range of the optical fiber core diameter, the distance not substantially exceeding the maximum amplitude of the relative movement of the light-reflecting surface (5) with respect to the end face (23) of the optical fiber (7).

5. The fiber-optical reflection sensor of claim 4 or 5, characterized in that the distance of the end face (23) of said optical fiber (7) from the reflecting surface (5) is less than 200 µm, preferentially less than 100 µm.

6. The fiber-optical reflection sensor of claim 4, characterized in that the bore (6) of said block (3) has a greater diameter at its side away from the reflecting surface (5), said optical fiber (7) being fixed in this greater diameter region of said bore (6) by glueing, pouring or puttying (Fig. 3).

7. The fiber-optical reflection sensor of claims 4—6, characterized by an elastic membrane (9) carrying the light-reflecting surface (5).

8. The fiber-optical reflection sensor of claim 7, characterized in that the optical fiber (7) fixed in said block (3) and the membrane (9) have axes extending parallel to each other and preferentially coaxial to each other (Fig. 2).

9. The fiber-optical reflection sensor of claim 7 or 8, characterized in that the optical fiber (7) held in said block (3) is offset from the axis of the concave end face (4) (Fig. 5).

10. The fiber-optical reflection sensor of claims 4—9 characterized in that the end face of the block (3) has a concavely ground face (4) in the region of the optical fiber end, and the membrane (9) is adhesively affixed to the rim of the end face of the block (3) by pouring, glueing or puttying.

11. The fiber-optical reflection sensor of claims 4 through 10, characterized in that the light-reflecting surface has a dull polish and has a large diffuse or incoherent reflection coefficient for the wave length of the light transmitted by the optical fiber (7).

12. The fiber-optical reflection sensor of claim 11, characterized in that the diffusely light-reflecting surface (5) has a roughness smaller than 1 µm.

13. The fiber-optical reflection sensor of claims 4—12, characterized in that the distance between the end face (23) of said optical fiber (7) and said reflecting surface (5) is smaller than the diameter of the core (1) of said fiber (7) (Fig. 6).

14. The fiber-optical reflection sensor of claims 4—13, characterized in that the distance of the optical fiber end face (23) from the light-reflecting surface (5) multiplied by three times the sine of half the incident angle (α/2) of the optical fiber (7) is smaller than the diameter of the optical fiber core (1).

15. The fiber-optical reflection sensor of claims 4—14, characterized in that the membrane (9) has an inherent frequency corresponding to a preferred frequency to be measured.

16. The fiber-optical reflection sensor of claims 4—14, characterized in that the inherent frequency of the membrane (9) is far outside the frequency band of the oscillations to be measured.

17. The fiber-optical reflection sensor of claims 4—16, characterized in that the membrane is strongly damped.

18. The fiber-optical reflection sensor of claims 4—17, characterized by a rigid body (27) carrying the light-reflecting surface (5), the block (3) which holds said optical fiber (7) being arranged oscillatingly with respect to the rigid body (Fig. 7).

19. The fiber-optical reflection sensor of claims 4—17, characterized in that said elastic membrane (9) carries the light-reflecting surface and spans said block (3), and in that a holder (29) oscillatingly supports the block (3) to form an oscillating system, the system having an inherent frequency far outside the frequency band to be measured (Fig. 8).

20. The fiber-optical reflection sensor of claims 4—17, characterized in that the block (3) is held oscillatingly with respect to the rigid body (27) which comprises said reflecting surface (5) and carries said optical fiber (7), said block having an inherent frequency corresponding to a preferred frequency to be measured (Fig. 7).

21. The fiber-optical reflection sensor of claims 4—20, characterized in that the angle of emergence (β) is between 10° and 30°, the angle of emergence being the angle between the axis (25) of the optical fiber (7) and a plane extending perpendicularly to a plane passing tangentially through a point of intersection between the axis (25) of the optical fiber (7) and the end face thereof (Fig. 5, 9).

22. The fiber-optical reflection sensor of claims 4—21, characterized in that in said block (3) at least two optical fibers (7) are fixed the axes of said fibers extending parallel to each other, and in that the axes (25) of the optical fibers (7) have angles of emergence (β) between 10° and 30°, the end faces (23) of the optical fibers (7) being positioned at respective sides of the axis of the membrane (Fig. 9).

23. The fiber-optical reflection sensor of claim 4, characterized by another block (17) which carries the light-reflecting surface (5), the other block (17) having the same weight as the block which carries the optical fiber (7), the block carrying the optical fiber (7) being oscillatingly supported with respect to the other block (17) to form an oscillating system, the blocks (3, 17) having facing surfaces extending parallel to each other and the oscillating system (3, 17) having an inherent frequency corresponding to double the frequency to be measured (Fig. 4).

24. The fiber-optical reflection sensor of claim 23, characterized in that the distance between the two blocks (3, 17) is less than 100 μm.

25. The fiber-optical reflection sensor of claim 23 or 24, characterized by a holder (20) oscillatingly supporting the two blocks (3, 17), the oscillating force effective between the blocks (3, 17) substantially exceeding the oscillating force between the blocks (3, 17) and the holder (20) (Fig. 4).

26. The fiber-optical reflection sensor of claim 23 or 24, characterized by a holder (20) oscillatingly supporting the two blocks (3, 17), the oscillating force effective between the blocks (3, 17) being substantially smaller than the oscillating force between the blocks (3, 17) and the holder (20) (Fig. 4).

27. The fiber-optical reflection sensor of claim 23—27, characterized in that the two blocks (3, 17) are of a magnetizable material (Fig. 4).

28. The fiber-optical reflection sensor of claims 23—27, characterized in that a plurality of said pairs of blocks (3, 17) are combined into a unit, the optical fibers (7) extending in respective ones of said blocks in three directions mutually perpendicular to each other.

29. The fiber-optical reflection sensor of claims 4 through 26 and 28, characterized in that the blocks (3) carrying the optical fibers (7) are comprised of ceramics or glass, preferentially quartz glass.

30. The fiber-optical reflection sensor of claim 4—29, characterized in that the optical fibers (7) and the block (3) carrying said fibers (5) have similar temperature coefficients.

31. The fiber-optical reflection sensor of claims 4—30, characterized in that a plurality of the blocks (3) are combined into a unit, and in that a source of light (33) and a light beam divider transmit the light to the optical fibers fixed to respective ones of the blocks (5) (Fig. 12).

32. The fiber-optical reflection sensor of claim 31, characterized in that the blocks (3) and the optical fibers adhesively fixed thereto extend in different directions and can be supplied with light from a light source (33) via a light beam divider (Fig. 17).

33. The fiber-optical reflection sensor of claim 31, characterized in that the blocks (3) carrying said fibers (7) have different masses (Fig. 13).

34. The fiber-optical reflection sensor of claims 4—17, 19, 21, 22 and 28—33, characterized in that the end face (8) of the block (3) carrying said fiber (7) is concavely ground (4) and the concavely ground end face of the block (3) faces the light-reflecting surface (5).

35. The fiber-optical reflection sensor of claims 4—21, characterized in that at least two of said optical fibers (7) are fixed in the block (3), the optical fibers (7) have axes inclined with respect to each other and the angles of emergence (β) of the optical fiber axes differing from each other.

Fig. 1

EP 0 209 515 B1

*Fig. 2*

EP 0 209 515 B1

Fig. 3

3

Fig. 4

Fig. 5

Fig. 6

Fig. 7

7

24, 25

29

4  23  5  9  8

28

6

2

3

28

1

10

7

*Fig. 8*

Fig. 9

*Fig. 10*

**Fig. 11**

*Fig. 12*

*Fig. 13*

Fig. 14